(19) **Europäisches Patentamt / European Patent Office / Office européen des brevets**

(11) **EP 4 751 568 A1**

(12) # EUROPEAN PATENT APPLICATION

(43) Date of publication:
03.06.2026 Bulletin 2026/23

(21) Application number: 25160237.1

(22) Date of filing: 26.02.2025

(51) International Patent Classification (IPC):
*A01N 25/02* (2006.01)     *A01N 65/48* (2009.01)

(52) Cooperative Patent Classification (CPC):
(C-Sets available)
A01N 25/02; A01N 65/48     (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.11.2024 CN 202411726121

(71) Applicant: Chengdu Newsun Crop Science Co.,
Ltd.
Chengdu Sichuan 611630 (CN)

(72) Inventors:
• CHEN, Tingzhuo
Chengdu, 611630 (CN)

• ZHANG, Jie
Chengdu, 611630 (CN)
• LIU, Ke
Chengdu, 611630 (CN)
• SUN, Yubi
Chengdu, 611630 (CN)
• MU, Tianxiu
Chengdu, 611630 (CN)
• TANG, Qingqing
Chengdu, 611630 (CN)
• REN, Dan
Chengdu, 611630 (CN)
• HE, Qiming
Chengdu, 611630 (CN)

(74) Representative: Murgitroyd & Company
165-169 Scotland Street
Glasgow G5 8PL (GB)

(54) **ZINGIBERACEAE PLANT EXTRACT AND COMPOSITION THEREOF AND USE IN PEST CONTROL**

(57) For the first time, the excellent insect-resistant activity of a *Zingiberaceae* plant extract on pests such as agricultural pest mites and thrips and a compounding synergism and co-extraction synergism relationship among extracts of different species of the *Zingiberaceae* is discovered, an application range of the *Zingiberaceae* extract is expanded, and a new choice for controlling the pest mites and thrips in agriculture is also provided.

EP 4 751 568 A1

(52) Cooperative Patent Classification (CPC): (Cont.)

C-Sets
**A01N 25/02, A01N 65/48;**
**A01N 25/02, A01N 65/48, A01N 65/48;**
**A01N 65/48, A01N 65/48**

**Description**

**TECHNICAL FIELD**

The present disclosure mainly relates to a use of a *Zingiberaceae* plant in pest control and an insecticidal composition of a *Zingiberaceae* plant extract, and includes the fields of natural plant chemistry and pest control.

**BACKGROUND**

Pest control, a worldwide problem, has now experienced the emergence and widespread use of hundreds of chemically developed insect repellents, growth regulators, and insecticides, including pyrethroids, DEET and other aromatic amides, organophosphates, and carbamates. The effectiveness of these products is often limited by factors including human or environmental toxicity, insect resistance (especially to pyrethroids, see e.g. Romero et al.), limited dry residue activity, repellency and physical factors (odor and coloration) that make them unsuitable for indoor use. However, in recent years, the demand for effective pest control products of natural origin has been extremely strong.

Mites are important pests in agricultural production, and are harmful to cotton, grains, fruit trees, forest trees and ornamental plants. *Tetranychus cinnabarinus* is one of the ten major pests in China. *Tetranychus urticae* can pierce 18-22 plant cells per minute. *Panonychus ulmi* and *Tetranychus viennensis* are important pest mites of fruit trees in northern China, and can seriously reduce the fruit yield by 1/3-2/3. *Petrobia Latens Muller* spreads in the wheat producing areas of China and can seriously harm the harvest of wheat grains. Many *Tetranychus cinnabarinus* are harmful to cotton fields, can reduce the yield by 30% or more, and even completely wither cotton plants. The *Bryobinae* species are harmful to grasses and dwarf plants. *Bryobia praetiosa* is a species distributed worldwide and is often harmful to the wheat crops simultaneously with *Petrobia latens* in northern China. *Bryobia rubrioculus* is distributed in America, Europe, Asia, South Africa and Oceania, and is important pest mites of fruit trees. 3-5 generations occur in the northern China in one year and 8-10 generations occur in the southern China. *Tetranychinae* is harmful to all higher plants. The *Tetranychinae* commonly includes the genera *Tetranychus, Panonychus, Eotetranychus, Oligonychus* and *Schizotetranychus.* Among them, *Panonychus citri*(*Panonychus citri*) is widely distributed in a citrus producing area of the world, is an important pest mite in citrus production, and can be harmful to citrus seedlings and adult trees. The harmed leaves show grey-white spots. *Oligonychus perditus Pritchard et Baker* is harmful to cypress trees and is distributed in China and Japan. In drought years, the cypress trees are seriously damaged, the crowns of the cypress trees are yellow, and leaves fall off. *Schizotetranychus yoshimekii* is distributed in the southwest China and Thailand, is seriously harmful to rice, and eats the leaves to enable the whole leaves to lose green and present grayish green to grayish white. The damaged rice has short ears and small grains, and the yield is reduced by about 10% generally and can reach 30% or more in serious cases.

Thrips is a general name of insects of the *Thysanoptera* order, and tiny and often hidden in flowers and young leaves. The thrips has strong fecundity, serious generation overlap and high outbreak frequency. Global trade and climate warming accelerate the diffusion and harm of thrips pests. The thrips pests have become one of the most important agricultural pest groups in the world gradually. The thrips is harmful to various plants in agriculture, forestry and gardening, and is the most serious in tropical and subtropical regions. The rapid diffusion and spread of the thrips is exacerbated by the transportation of agricultural products in different regions. The global spread of *Frankliniella occidentalis* and *Thrips palmi Karny* is severe. Besides, the common world- or regionally-important species of the thrips pests further include *Thrips tabaci Lindeman, Thrips hawaiiensis (Morgan), Frankliniella intonsa (Trybom), Frankliniella bispinosa (Morgan)* and *Scirtothrips dorsalis Hood.*

*Zingiberaceae* is a perennial herbaceous plant known for its unique pungent flavor and broad medicinal value. The *Zingiberaceae,* originally produced in southeast Asia, has been widely planted in tropical and subtropical regions of the world and becomes one of important economic crops. The *Zingiberaceae* is abundant in variety and includes other species of genera such as *Curcuma longa, Kaempferia galanga, Alpinia galanga, Hedychium coronarium* and *Alpinia zerumbet* in addition to the most common *Zingiber officinale.*

In agriculture, the *Zingiberaceae* is not limited to be planted as seasonings and medicinal materials. An extract thereof has multiple potential uses in modern agriculture. The *Zingiberaceae* plant extract contains abundant active components such as gingerol, zingiberone, gingerol,pinene,camphene,$\alpha$-terpineol,linalool.The *Zingiberaceae* plant extract has various biological activities of resisting bacteria, fungi, viruses and pests. The insect-resistant activity is mainly concentrated on parasites, the *Coleoptera* order such as *Stegobium paniceum,* the *Hemiptera* order such as *Aleyrodidae,* the *Lepidoptera* order such as *Spodoptera litura,* the *Diptera* order such as *Drosophila melanogaster,* and the *Hymenoptera* such as *Eutricharaea rotundata* and the like. But no effect report is provided for pests such as mites, thrips and the like.

## EP 4 751 568 A1

### SUMMARY

In order to provide natural insecticides which have good control effects on pests such as mites and thrips, the present disclosure aims to study *Zingiberaceae* plants and hopes to find a new opportunity for controlling the pests such as mites and thrips.

The present disclosure discovers the excellent insect-resistant activity of a *Zingiberaceae* plant extract on pests such as mites, and thrips of the *Thysanoptera* order for the first time. At the same time, a compounding synergism relationship among extracts of different species of the *Zingiberaceae,* expands an application range of the *Zingiberaceae* plant extract and also provides a new choice for controlling the mites and thrips in agriculture.

Further, in some specific embodiments, it is found that the present disclosure performs activity determination after various *Zingiberaceae* plants are extracted by different solvents and methods. The result shows that the *Zingiberaceae plant* extract can significantly control targets such as *Tetranychus cinnabarinus, Panonychus citri, Tetranychus urticae* and thrips, including contact toxicity and repellent toxicity indexes on nymphs, adults and insect eggs.

Specifically, the present disclosure provides a use of a *Zingiberaceae* plant extract in killing and/or controlling pests, and/or repelling the pests, and/or preventing or reducing spawning of the pests, and/or preventing or reducing hatching of pest eggs; the *Zingiberaceae* plant is selected from one or a combination of two or more of *Zingiber officinale, Kaempferia galanga, Alpinia galanga, Hedychium coronarium* and *Alpinia zerumbet;* the extract is one or a combination of two or more of a volatile oil, a water extract, an ethanol extract, an ethyl acetate extract and a methanol extract; the extract can be obtained by extracting one *Zingiberaceae* plant alone or co-extracting two or more *Zingiberaceae* plants; and the pests are selected from insects of the *Thripidae* family, and/or animals of the *Tetranychidae* family, and/or animals of the *Tenuipalpidae* family, and/or animals of the *Eriophyidae* family, and/or animals of the *Tarsonemidae* family, and/or animals of the *Pyemotidae* family, and/or animals of the *Penthaleidae* family, and/or animals of the *Cheyetidαe* family, and/or animals of the *Sarcopteridae* family, and/or animals of the *Acaridae* family, and/or animals of the *Pyroglyphidαe* family.

During the extraction, various parts of the *Zingiberaceae* plant may be selected, including but not limited to rhizomes, overground parts, etc.

Further, the *Zingiberaceae* plant extract is selected from one of a *rhizoma zingiberis recens* extract and a *rhizoma kaempferia* extract, or a composition of the *rhizoma zingiberis recens* extract and the *rhizoma kaempferia* extract at a ratio of (1-9):(9-1), for example, the ratio of the *rhizoma zingiberis recens* extract to the *rhizoma kaempferia* extract is 1:1, 1:2, 1:3, 1:4, 1:5, 1:6, 1:7, 1:8, 1:9, 2:1, 2:3, 2:5, 2:7, 2:9, 3:1, 3:2, 3:4, 3:5, 3:7, 3:8, 4:1, 4:3, 4:5, 4:7, 4:9, 5:1, 5:2, 5:3, 5:4, 5:6, 5:7, 5:8, 5:9, 6:1, 6:5, 6:7, 7:1, 7:2, 7:3, 7:4, 7:5, 7:6, 7:8, 7:9, 8:1, 8:3, 8:5, 8:7, 8:9,9:1,9:29:4,9:5,9:7,9:8, etc.

Furthermore, the ratio of the *rhizoma zingiberis recens* extract to the *rhizoma kaempferia* extract is (7-9):(3-1), for example, the ratio of the *rhizoma zingiberis recens* extract to the *rhizoma kaempferia* extract is 7:3, 7:2, 7:1, 8:3, 8:2, 8:1, 9:3, 9:2, 9:1, etc.

Further, the *rhizoma zingiberis recens* extract is prepared by extracting *rhizoma zingiberis recens* with ethanol and ethyl acetate at a ratio of (1-4): 1; and the *rhizoma kaempferia* extract is a *rhizoma kaempferia* volatile oil. The study shows that the pest control effect is better when the extract is selected from the above cases. Furthermore, when the ratio of the *rhizoma zingiberis recens* extract to the *rhizoma kaempferia* extract is 7:3, a synergistic effect can be exerted and the pest control effect is significantly improved.

Extraction methods of a water extract, an ethanol extract, an ethyl acetate extract, etc. of the present disclosure may be conventional plant extraction methods, such as may be selected from but not limited to heating extraction, percolation extraction, ultrasonic extraction, microwave extraction, impregnation extraction, supercritical extraction, etc.

The "ethanol" of the present disclosure is selected from ethanol with the concentration of 95% or more, and includes but is not limited to 95% ethanol, absolute ethanol, etc.

In some specific embodiments of the present disclosure, a mixed solvent of ethanol and ethyl acetate is preferably used for extraction. A study finds that the pest control effect of a mixed solvent extract is superior to that of a single solvent. The mixed solvent may be selected from ethanol and ethyl acetate at a ratio of (1-4):1.

In one specific embodiment of the present disclosure, the ethanol and the ethyl acetate at the ratio of 4:1 are used for extraction. The control effect of the *rhizoma zingiberis recens* extract thereof is obviously superior to that of the single ethanol extract or the single ethyl acetate extract.

The "extract can be obtained by co-extracting two or more *Zingiberaceae* plants" of the present disclosure refers to performing two or more *Zingiberaceae* plants in a same container and solvent at the same time. For example, *rhizoma zingiberis recens* and *rhizoma kaempferia* are put into the container for extraction at the same time.

After the extraction, other conventional preparation steps are further included, such as filtration, concentration, centrifugation, drying, evaporation, etc. In order to facilitate storage, transportation and use, solvents of other solvent extracts except a volatile oil may be removed to prepare dried products after the extraction. Methods for removing the solvents include, but are not limited to, atmospheric evaporation, reduction vaporization, thin film evaporation, natural volatilization, etc.

In order to extract bioactive constituents from the *Zingiberaceae* plants as much as possible, the *Zingiberaceae* plant raw material may be pulverized.

In some specific embodiments of the present disclosure, the ratio of the solvent added to the *Zingiberaceae* plant raw material is a "liquid-to-material ratio" during the extraction, generally (4-60):1 (mL/g, L/Kg, etc.), such as 4:1, 5:1, 6:1, 7:1, 8:1, 9:1, 10:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30:1, 31:1, 32:1, 33:1, 34:1, 35:1, 36:1, 37:1, 38:1, 39:1, 40:1, 42:1, 43:1, 44:1, 45:1, 46:1, 47:1, 48:1, 49:1, 50:1, 55:1, 60:1, etc.

A "material-to-liquid ratio" is the ratio of the *Zingiberaceae* plant raw material to the solvent and is reciprocal to the "liquid-to-material ratio".

In some specific embodiments of the present disclosure, during the heating extraction, heat extraction or heat refluxing may be used. During the extraction, the temperature includes, but not limited to, 20°C-95°C, such as 20°C, 25°C, 30°C, 35°C, 40°C, 45°C, 50°C, 55°C, 60°C, 65°C, 70°C, 75°C, 80°C, 85°C, 90°C, 95°C, etc.

The extraction times are selected according to requirements, generally 1-4 times, wherein the extraction times are commonly selected from 2 or 3 times.

In addition, the extraction conditions of the conventional extraction methods such as the ultrasonic extraction, the microwave extraction, the supercritical extraction, etc. in the present disclosure may be obtained by routine adjustment by those skilled in the art.

In some specific embodiments of the present disclosure, in the extraction process of the *rhizoma zingiberis recens,* the material-to-liquid ratio is 1:(20-60), the extraction time is 1-4 h, and the extraction times are 1-3.

In the present disclosure, a volatile oil is extracted by conventional extraction methods, mainly steam distillation, extraction, adsorption, etc. (refer to "Extraction Technology For Natural Plant Product", Chemical Industry Press, 2022.7, pages 100-110).

In some specific embodiments of the present disclosure, the *rhizoma kaempferia* volatile oil is prepared by steam distillation, the material-to-liquid ratio is 1:(15-25), the distillation time is 5 h or more, and the concentration of sodium chloride in water is 2-4%. The concentration of the sodium chloride is generally mass volume percent, for example, 100 mL of water contains 2-4 g of sodium chloride.

The *Zingiberaceae* plant extract may be used as the only active raw material, and may also be used in combination with other insecticides, miticides and microbicides, including but not limited to natural plant extracts, artificial compounds, etc.

Based on the synergistic pest control activity generated by combining the *rhizoma zingiberis recens* and the *rhizoma kaempferia,* the present disclosure further provides an insecticidal composition, including a mixture of a *rhizoma zingiberis recens* extract and a *rhizoma kaempferia* extract at a ratio of (1-9):(9-1), wherein the *rhizoma zingiberis recens* extract is prepared by extracting *rhizoma zingiberis recens* with ethanol and ethyl acetate at a ratio of (1-4):1; and the *rhizoma kaempferia* extract is a *rhizoma kaempferia* volatile oil.

The ratio of the ethanol to the ethyl acetate may be 1:1, 1.5:1, 2:1, 2.5:1, 3:1, 3.5:1, 4:1, etc.

Further, the mixture of a *rhizoma zingiberis recens* extract to a *rhizoma kaempferia* extract at a ratio of (7-9):(3-1) is included.

Preferably, the mixture of a *rhizoma zingiberis recens* extract to a *rhizoma kaempferia* extract at a ratio of 7:3 is included. Through experimental research, the mixture of the ratio may significantly improve the pest control effect of the *rhizoma zingiberis recens* extract and the *rhizoma kaempferia* extract. The two materials under the specific ratio produce a synergistic effect.

In the present disclosure, the ratio of the extracts is generally a mass ratio.

In the present disclosure, the solvent extracts other than the volatile oil may be dried products from which the solvents are removed, or may be products containing a certain amount of solvents.

When the *rhizoma zingiberis recens* extract and the *rhizoma kaempferia* extract are mixed according to the ratio. The amount of other extracts except the volatile oil is calculated by dried products. But this does not mean that all the solvent extracts can only be dried products from which the solvents are removed. The present disclosure considers that the extract containing a solvent may also be used for mixing. After the concentration is converted into the content of the dried product of the extract containing the solvent, the mixing may be performed according to the ratio. For example, when the *rhizoma zingiberis recens* extract, from which the solvents are not removed, using ethanol and ethyl acetate at a ratio of 4:1 is not completely concentrated and dried, the solvent accounts for 80%. If the ratio of the *rhizoma zingiberis recens* extract (the dried product from which the solvent is removed) to the *rhizoma kaempferia* volatile oil is expected to be 7:3, the ratio of the *rhizoma zingiberis recens* extract from which the solvent is not removed to the *rhizoma kaempferia* volatile oil is 35:3.

In the extraction process of the *rhizoma zingiberis recens,* the material-to-liquid ratio is 1:(20-60), the extraction time is 1-4 h, and the extraction times are 1-3; and the *rhizoma kaempferia* volatile oil is prepared by steam distillation, the material-to-liquid ratio is 1:(15-25), the distillation time is 5 h or more, and the concentration of sodium chloride in water is 2-4%.

In some specific embodiments of the present disclosure, the total amount of the *rhizoma zingiberis recens* extract and the *rhizoma kaempferia* extract in the composition accounts for 0.1-100%, including any content between them, such as 0.3%, 0.4%, 0.5%, 0.6%, 0.7%, 0.8%, 0.9%, 1%, 2%, 5%, 7.5%, 10%, 15%, 20%, 25%, 30%, 35%, 40%, 45%, 50%, 55%, 60%, 65%, 70%, 75%, 80%, 85%, 90%, 95%, 98% or 99%.

In addition to the mixture, the composition further includes one or two or more of $\alpha$-curcumene, 5-hydroxy-1-(4-hydroxy-3-methoxyphenyl)-3-decanone, and 1-(2,4-dichlorophenoxy)propan-2-yl(2-fluoroethyl)sulfite. A study finds that after the compounds and the mixture are compounded, the pest control effect may also be improved to generate a synergistic effect.

For example, mixture: $\alpha$-curcumene = 1:(2-8); mixture:5-hydroxy-1-(4-hydroxy-3-methoxyphenyl)-3-decanone = 1:(2-8); and mixture:1-(2,4-dichlorophenoxy)propan-2-yl(2-fluoroethyl)sulfite = 1:(2-8).

In the present disclosure, the *Zingiber officinale* is derived from a *Zingiberaceae* plant and the *Kaempferia galanga* is derived from a *Zingiberaceae* plant.

The extraction method of the present disclosure may refer to the reports of the prior art, such as:

(1) Zhang Dongmei and Yuan Ting. Study on the Extraction Technology of Volatile Oil from Ginger by Steam Distillation [J]. Agricultural Technology & Equipment, 2023, (02): 27-28.

(2) Liu Jiangwei and Ye Fei. Study on Extraction of Ginger Oil by Steam Distillation [J]. Modern Agriculture Research, 2018(04).

(3) Sun Jiayi. Research Progress on Extraction,Development and Utilization of Ginger Essential Oil [J]. Shandong Chemical Industry, 2019(24) .

(4) Yang Shiwei. Study on Supercritical CO2 Fluid Extraction and Microcapsulation of Ginger Essential Oil [D]. Tianjin University of Science and Technology, 2015.

(5) Chenqi. Microwave Assisted Hydro-distillation Extraction of Essential Oil from of Kaempferia Galanga L [J]. Chemical Engineering Management, 2015, (12):2-3.

(6) Liu Xuemei, Liang Jianqin, Lu Bin, et al. Study on the Chemical Constituents of Volatile Oils from Kaempferia Galanga L.in Fresh and Dried Characters [J]. Lishizhen Medicine and Materia Medica Research, 2008, (08):2007-2009.

(7) Lin Zhaoyu. Study on Steam Distillation Law Draw of Characteristic Component-Kaempferia Galanga L. oil [J]. China Condiment, 2005, (08):28-31.

(8) Chen Qingsheng, He Jingyu, Meng Xiao, et al. Study on Anti-hair Loss and Anti-dandruff Effect of Active Extract from Three Kinds of Zingiberaceae [J]. Guangdong Chemical Industry, 2021, 48(22):70-72.

(9) Wu Cunbing, Shao Bojin, Wu Junyan, et al. Optimization of Ethanol Extraction of Flavonoids from Ginger and Evaluation of its Stability [J]. Journal of Southern Agriculture, 2020,51(11): 2798-2807.

(10) Rao Jiarui, Zhang Xin and Yu Yongxiu. Extraction of Natural Products of Fresh Ginger and its Indoor Virulence Strength to Tea Grey Blight [J]. Agricultural Technology Service, 2021, 38(08):31-34.

(11) Zhou Yeyan. Microwave Extraction Process and Application Technology Research of Spices [D]. Guangzhou University, 2011.

(12) Wu Xiaofei. Research on Inhibiting Effect of Kaempferia Galanga extract on Dominant Spoilage Bacteria of Poultry Products [D]. Qingdao University of Science and Technology, 2020.

(13) Ping Xueli. Extraction and Identification of Active Ingredients of Kaempferia Galanga and Use thereof in Composite Film [D]. Chongqing Technology and Business University, 2022.

In the use of the present disclosure, the *Zingiberaceae* plant extract may be directly used as a single agent.

The insecticidal composition of the present disclosure may also be directly used as a single agent.

The "single agent" provided by the present disclosure is a product which only takes the *Zingiberaceae* plant extract as a unique component and does not contain other auxiliary materials.

In order to make the product more stable and convenient for transportation and storage, the *Zingiberaceae* plant extract may be made into corresponding dosage forms together with the auxiliary materials. The auxiliary materials may be conventional in the art, such as a surfactant, a solvent, etc.

Suitable surfactants may be selected by those skilled in the art according to the actual use requirements. Examples of the surfactants that may be used in some embodiments of the present disclosure include, but are not limited to, ethoxylated castor oil, sodium lauryl sulfate, saponins, ethoxylated alcohols, ethoxylated fatty esters, alkoxylated glycols, ethoxylated fatty acids, carboxylated alcohols, carboxylic acids, fatty acids, ethoxylated alkylphenols, fatty esters, sodium lauryl sulfide, other fatty acid-based surfactants, other natural or synthetic surfactants, and a combination thereof. In some embodiments, the surfactant is a nonionic surfactant. In some embodiments, the surfactant is an ionic surfactant. The selection of the suitable surfactants depends on the relevant application and use conditions, and the suitable surfactants are known to those skilled in the art.

In the present disclosure, the dosage form includes but is not limited to a missible oil, a soluble powder, a soluble granule, a soluble liquid, a dispersible liquid, an aqueous emulsion, a microemulsion, a microcapsule suspension concentrate, a seed treatment liquid, an aerosol, etc.

The missible oil is a pesticide preparation, and is liquid prepared by dissolving a relatively high concentration effective component in a solvent and adding an emulsifier. Generally, after the missible oil is diluted with a large amount of water to form a stable emulsion, the emulsion is sprayed by a sprayer, may also be sprayed in a low volume or an ultra-low-volume, and may be directly used or sprayed after being diluted by water.

The wettable powder is a fine dry agent obtained by mixing and crushing a raw medicine, a filler, a surfactant and other auxiliaries together.

The suspension concentrate is a preparation prepared by uniformly dispersing a solid raw medicine into water in the form of microparticles of 4 microns or less, has the international code of SC, has the fine particle size pf generally 0.1-3 μm, and has a high suspension rate. The suspension concentrate is divided into an aqueous suspension concentrate and an oil suspension concentrate. The aqueous suspension concentrate uses water as a suspending medium, and the oil suspension concentrate uses oil as a suspending medium and does not contain water. Commonly used oils are vegetable oils such as corn oil, rapeseed oil, etc. The suspension concentrate may be completely free of organic solvents and is a good dosage form for processing a solid original medicine. The suspension concentrate is a mixture of a solid powder and a liquid suspended in water, and is required to be uniformly shaken before use, then diluted by adding water and sprayed. The suspension concentrate is easy to carry and dilute, may be uniformly sprayed, and has better adhesiveness and persistence.

The powder is an original medicine powder or a powder prepared by adding a certain diluent. The powder may be directly sprayed by a simple powder sprayer, has high working efficiency, small crop adhesion and small residual amount, and is not prone to causing drug damage.

The granule is a solid dosage form obtained by mixing and granulating a original medicine with auxiliaries such as a carrier, an adhesive, a dispersing agent, a wetting agent, a stabilizing agent, etc. Its performance requirements mainly include fineness, uniformity, storage stability, hardness, disintegration property, etc. The granule has the largest particle size, the diameter of 300-1,700 μm, in the solid dosage forms, and has the advantages of simple use, small outward diffusion and lasting drug effect.

The aqueous solution is a solution of an original medicine, the medicine is dispersed in water in an ionic or molecular state, the concentration of the medicine depends on the water solubility, generally the maximum solubility, of the original medicine. Before use, the solution is diluted by adding water.

In a use process, an odor masking agent may be further added. In some embodiments, the odor masking agent is a vanilla extract, wintergreen oil, spearmint oil, clove oil, lemongrass oil, and/or a combination thereof.

In a use process, an odor neutralizer may be further added. In some embodiments, the odor neutralizer may be an odor absorbing material, such as zeolite and/or other natural or synthetic odor absorbent materials.

A mother liquor or a mother powder is a semi-finished product processed from an original medicine and needs to be processed continuously to prepare a final product.

In the present disclosure, the *Zingiberaceae* plant extract is prepared into a liquid dosage form for use. When the liquid dosage form is used for controlling mites or thrips, the concentration of the *Zingiberaceae* plant extract in the liquid dosage form may be selected according to actual needs.

In some specific embodiments of the present disclosure, the composition further comprises a solvent; and the total concentration of the *rhizoma zingiberis recens* extract and the *rhizoma kaempferia* extract is 0.1 mg/mL or more. The total concentration refers to the concentration of the mixture of the *rhizoma zingiberis recens* extract and the *rhizoma kaempferia* extract in the composition.

Further, the total concentration of the *rhizoma zingiberis recens* extract and the *rhizoma kaempferia* extract is 0.1-1,000 mg/mL, and may also be 0.1-500 mg/mL, 0.1-200 mg/mL, 0.1-100 mg/mL, 0.1-50 mg/mL, 1-500 mg/mL, 1-200 mg/mL, 1-100 mg/mL, 1-50 mg/mL, 1-10 mg/mL, 1-5 mg/mL, 2-200 mg/mL, 2-100 mg/mL, 2-50 mg/mL, 2-10 mg/mL, 3-200 mg/mL, 3-100 mg/mL, 3-50 mg/mL, 3-10 mg/mL, 4-200 mg/mL, 4-100 mg/mL, 4-50 mg/mL and 4-10 mg/mL. Specifically, the concentration may be selected from but not limited to 0.1 mg/mL, 0.2 mg/mL, 0.3 mg/mL, 0.4 mg/mL, 0.5 mg/mL, 0.6 mg/mL, 0.7 mg/mL, 0.8 mg/mL, 0.9 mg/mL, 1 mg/mL, 1.1 mg/mL, 1.2 mg/mL, 1.3 mg/mL, 1.4 mg/mL, 1.5 mg/mL, 1.6 mg/mL, 1.7 mg/mL, 1.8 mg/mL, 1.9 mg/mL, 2.0 mg/mL, 2.5 mg/mL, 3 mg/mL, 3.5 mg/mL, 4 mg/mL, 4.5 mg/mL, 5 mg/mL, 5.5 mg/mL, 6 mg/mL, 6.5 mg/mL, 7 mg/mL, 7.5 mg/mL, 8 mg/mL, 8.5 mg/mL, 9 mg/mL, 9.5 mg/mL, 10 mg/mL, 11 mg/mL, 12 mg/mL, 13 mg/mL, 14 mg/mL, 15 mg/mL, 20 mg/mL, 25 mg/mL, 30 mg/mL, 35 mg/mL, 40 mg/mL, 45 mg/mL, 50 mg/mL, 100 mg/mL, etc.

In some embodiments of the present disclosure, the solvent may also be selected from water, ketones, alcohols, aldehydes, ethers, esters, or carboxylic acids, and may include non-aryl ketones, non-aryl alcohols, non-aryl aldehydes, non-aryl esters, non-aryl carboxylic acids, aryl alcohols, aryl-alkyl alcohols, aryl aldehydes, aryl-alkyl ketones, aryl-aryl ketones, aryl carboxylic acids, aryl-alkyl esters, aryl-aryl esters, aryl-alkyl ethers, aryl-aryl ethers, and/or a combination thereof.

In some embodiments of the present disclosure, the solvent includes ethanol, isopropanol, benzyl alcohol, acetone, acetophenone, water, citric acid, lactic acid, glycerol, castor oil, benzoic acid, carbonic acid, ethoxylated alcohols, ethoxylated amides, glycerides, butanol, 1-propanol, hexanol, other alcohols, dimethyl ether, polyethylene glycol, etc.

The present disclosure further provides a method for killing and/or controlling pests, and/or repelling the pests, and/or preventing or reducing spawning of the pests, and/or preventing or reducing hatching of pest eggs, wherein the method is exposing the pests and/or the pest eggs to the insecticidal composition.

In the method, the applied concentration of the insecticidal composition, calculated as the mixture (calculated on the dried basis) of the *rhizoma zingiberis recens* extract and the *rhizoma kaempferia* extract, may be 0.1-1,000 mg/mL, and may also be 0.1-500 mg/mL, 0.1-200 mg/mL, 0.1-100 mg/mL, 0.1-50 mg/mL, 1-500 mg/mL, 1-200 mg/mL, 1-100 mg/mL, 1-50 mg/mL, 1-10 mg/mL, 1-5 mg/mL, 2-200 mg/mL, 2-100 mg/mL, 2-50 mg/mL, 2-10 mg/mL, 3-200 mg/mL, 3-100 mg/mL, 3-50 mg/mL, 3-10 mg/mL, 4-200 mg/mL, 4-100 mg/mL, 4-50 mg/mL and 4-10 mg/mL. Specifically, the concentration may be selected from but not limited to 0.1 mg/mL, 0.2 mg/mL, 0.3 mg/mL, 0.4 mg/mL, 0.5 mg/mL, 0.6 mg/mL, 0.7 mg/mL, 0.8 mg/mL, 0.9 mg/mL, 1 mg/mL, 1.1 mg/mL, 1.2 mg/mL, 1.3 mg/mL, 1.4 mg/mL, 1.5 mg/mL, 1.6 mg/mL, 1.7 mg/mL, 1.8 mg/mL, 1.9 mg/mL, 2.0 mg/mL, 2.5 mg/mL, 3 mg/mL, 3.5 mg/mL, 4 mg/mL, 4.5 mg/mL, 5 mg/mL, 5.5 mg/mL, 6 mg/mL, 6.5 mg/mL, 7 mg/mL, 7.5 mg/mL, 8 mg/mL, 8.5 mg/mL, 9 mg/mL, 9.5 mg/mL, 10 mg/mL, 11 mg/mL, 12 mg/mL, 13 mg/mL, 14 mg/mL, 15 mg/mL, 20 mg/mL, 25 mg/mL, 30 mg/mL, 35 mg/mL, 40 mg/mL, 45 mg/mL, 50 mg/mL, 100 mg/mL, etc.

In addition to the mixture of the *rhizoma zingiberis recens* extract and the *rhizoma kaempferia* extract, the insecticidal composition may further be compounded with other products including, but not limited to, one or more other insecticides, miticides, microbicides, herbicides, plant growth regulators or fertilizers, and compounds that are functionally equivalent but not yet commercially available, etc., thereby providing additional advantages and effects. For example, the other insecticides may be flupyradifurone, deltamethrin, ethiprole, tetraniliprole, imidacloprid, spirotetramat, spirodiclofen, afidopyropen, chlorfenapyr, cis-cypermethrin, broflanilide, ethofenazole, lambda-cyhalothrin, pymetrozine, thiamethoxam, lufenuron, abamectin, chlorantraniliprole, bifenthrin, cyantraniliprole, cyflumetofen, spinetoram, triflumezopyrim, flonicamid, pirimiphos-methyl, indoxacarb, dinotefuran, temephos, hydramethylnon, permethrin, hexaflumuron and bisulflufen.

The applied concentration of other products may be adjusted according to actual needs. For example, if α-curcumene, 5-hydroxy-1-(4-hydroxy-3-methoxyphenyl)-3-decanone, or 1-(2,4-dichlorophenoxy)propan-2-yl(2-fluoroethyl)sulfite are further needed to be added, calculated as the mixture of the *rhizoma zingiberis recens* extract and the *rhizoma kaempferia* extract, the amount of other products is as follows: mixture:α-curcumene = 1:(2-8); mixture:5-hydroxy-1-(4-hydroxy-3-methoxyphenyl)-3-decanone = 1:(2-8); and mixture:1-(2,4-dichlorophenoxy)propan-2-yl(2-fluoroethyl)sulfite = 1:(2-8).

The "comprise" or "include" of the present disclosure is to be interpreted in their open-ended sense, i.e., to specify the presence of the mentioned features, elements, steps or components, but does not exclude the presence or addition of further features, elements, steps or components.

The "pest" of the present disclosure refers to an organism that adversely affects hosts (e.g., a plant or an animal such as a mammal) by parasitizing, damaging, attacking, competing with for nutrients, or infecting them.

The pests include, without specific limitation, arthropods (including insects and arachnids), and piercing-sucking and biting pests (e.g., bedbugs, mites, ticks, ants, lice, cockroaches, thrips, etc.).

In some embodiments of the present disclosure, the pests are selected from one or more insects of the *Thysanoptera* order, the *Hemiptera* order, the *Lepidoptera* order, and animals of the *Tetranychidae* family, the *Tenuipalpidae* family, the *Eriophyidae* family, the *Tarsonemidae* family, the *Pyemotidae* family, the *Penthaleidae* family, the *Cheyetidαe* family, the *Sarcopteridae* family, the *Acaridae* family and the *Pyroglyphidae* family.

The *"Thysanoptera"* belongs to the *Insecta* class and the insect in this order is generally called "thrips". The thrips is divided into *Terebrantia* and *Tubulifera*. The *Terebrantia* includes *Aeolothripoidea (Aeolothripidae, Orothripidae, Melanthripidae, Dactuliothripidae* and *Franklinothripidae), Merothripoidea (Aeolothripoidea), Thripoidea (Heterothripidae, Hemithripidae, Ceratothripidae, Panchaetothripidae* and *Thripidae),* wherein the *Thripidae* is a largest and most important family of the order. There are about 200 species of 33 known genera in the family, such as *Frankliniella intonsa, Thrips tabaci Lindeman, Taeniothrips distalis Karny, Stenchaeotothrips biformis, Thrips hawaiiensis Morgan, Thrips palmi Karny, Frankliniella occidentalis, Thrips japonicus Bagnall, Thrips serratus Kobus, Frankliniella tenuicornis Uzel, Scirtothrips dorsalis Hood, Heliothrips haemorrhoidalis Bouche, Scirtothrips dorsalis Hood, Scolothrips sexmaculatus Pergande,* etc. which are all common species in China. The *Tubulifera* includes *Phlaeothripoidea (Pypothripidae, Ecacanthothripidae, Eupatithripidae, Phlaeothripidae, Chirothripoididae, Hystricothripidae, Idolothripidae* and *Megathripidae)* and *Urothripoidea (Urothripidae).* The parenthesis after the superfamily is the subfamily under the superfamily, and the following related to the superfamily is expressed by the method.

The *"Hemiptera"* belongs to the *Insecta* class. The *Hemiptera* order is divided into *Auchenorrhyncha* and *Sternorrhyncha.* The *Auchenorrhyncha* includes *Cicadiodea (Cicadidae, Membracidae, Machaerotidae, Cercopidae* and *Cicadellidae)* and *Fulgoroidea (Tettigometridae, Delphacidae, Fulgoridae, Eurybrachydidae, Cixiidae, Meenoplidae, Dictyopharidae, Achilidae, Tropiduchidae, Derbidae, Lophopidae, Issidae, Flatidae* and *Ricaniidae);* and the *Sternor-*

*rhyncha* includes *Psylloidea* (*Psyllidae*)*, Aleyrodoidea* (*Aleyrodidae*)*, Aphidoidea* (*Adelgidae, Phylloxeridae, Pemphigidae* and *Aphididae*) and *Coccoidea* (*Margarodidae, Ortheziidae, Kerridae, Kermidae, Dactylopiidae, Pseudococcidae, Asterolecaniidae, Coccidae* and *Diaspididae*)*.

The *"Lepidoptera"* belongs to the *Insecta* class, has an extremely wide distribution range and is most abundant in tropical species. Most larvae endanger various cultivated plants and the large larvae usually eat all leaves or bore branches and trunks. The *Lepidoptera* includes *Zeugloptera* (*Micropterygidae*)*, Monotrysia* (*Eriocraniidea, Hepialoidea, Stigmelloidea* and *Incurvarioidea*) and *Ditrhysia* (*Tinaeoidea, Cossoidea, Psychoidea, Castnioidea, Tortricoidea, Pyraloidea, Bombycoidea, Calliduloidea, Geometroidea, Sphingoidea, Noctuoidea, Hesperioidea* and *Papilionoidea*)*.

The "mites" of the present disclosure mainly include agricultural pest mites and mostly belong to *Tetranychidae, Tenuipalpidae, Eriophyidae, Tarsonemidae, Pyemotidαe, Penthaleidae* and *Cheyetidae* of the *Acachnida* class.

The *Tetranychidae* is divided into *Oligonychus* (such as *Oligonychus baipisongis, Oligonychus karamatus, Oligonychus rubicundus,* etc.)*, Eotetranychus* (such as *Eotetranychus albus, Eotetranychus bailae, Eotetranychus camelliae,* etc.)*, Tetranychus* (such as *Tetranychus neocaledonicus, Tetranychus phaselus, Tetranychus urticae* and *Tetranychus cinnabarinus*)*, Schizotetranychus* (such as *Schizotetranychus baltazarae, Schizotetranychus bambusae, Schizotetranychus elongatus,* etc.)*, Mixonychus* (such as *Mixonychus aestiva, Mixonychus ganjuis, Mixonychus murrayae,* etc.)*, Panonychus* (such as *Panonychus citri, Panonychus caglei, Panonychus ulmi,* etc.)*, Allonychus* (such as *Allonychus bambusae* and *Allonychus wuyinicus*)*, Stigmaeopsis* (such as *Stigmaeopsis celarius* and *Stigmaeopsis nanjingensis*)*, Mononychellus* (such as *Mononychellus georgicus), Acanthonychus* (such as *Acanthonychus jiangfengensis*)*, Amphitetranychus* (such as *Amphitetranychus viennensis*)*, Sonotetranychus* (such as *Sonotetranychus neosalix*)*, Xinella* (such as *Xinella huangshanensis*)*, Yunonychus* (such as *Yunonychus daliensis*)*, Neotetranychus* (such as *Neotetranychus lek*)*, Eurytetranychus* (such as *Eurytetranychus glycyrrhizae* and *Eurytetranychus wuyishanensis*)*, Aponychus* (such as *Aponychus aequilibris* and *Aponychus corpuzae*)*, Eutetranychus* (such as *Eutetranychus orientalis* and *Eutetranychus xianensis*)*, Stylophoronychus* (such as *Stylophoronychus baghensis), Eurytetranychoides* (such as *Eurytetranychoides japonicus*)*, Tenuipalpoides* (such as *Tenuipalpoides hastata* and *Tenuipalpoides zizyphus*)*, Bryobia* (such as *Bryobia borealis* and *Bryobia exserta*)*, Sinobryobia* (such as *Sinobryobia chinensis*)*, Petrobia* (such as *Petrobia* (*Petrobia*) *xinjiangensis, Petrobia* (*Tetranychina*) *zachvatkini,* etc.)*, Tetranycopsis* (such as *Tetranycopsis hystriciformis, Tetranycopsis spiraeae,* etc.)*, Aplonobia* (such as *Aplonobia alkalisalinae*)*, Mesobryobia* (such as *Mesobryobia terpoghossiani) and Dolichonobia* (*Dolichonobia altaiensis*)*.

In some embodiments of the present disclosure, the pests are selected from one or more of *Frankliniella intonsa, Thrips tabaci Lindeman, Taeniothrips distalis Karny, Stenchaeotothrips biformis, Thrips hawaiiensis Morgan, Thrips palmi Karny, Frankliniella occidentalis, Thrips japonicus Bagnall, Thrips serratus Kobus, Frankliniella tenuicornis Uzel, Scirtothrips dorsalis Hood, Heliothrips haemorrhoidalis Bouche, Scirtothrips dorsalis Hood, Scolothrips sexmaculatus Pergande, Cnaphalocrocis medinalis, Spodoptera exigua, Spodoptera litura, Carposina sasakii, Helicoverpa armigera, Plutella xylostella, Diaphania indica, Maruca testulalis Geyer, Bemisia tabaci Gennadius, Trialeurodes vaporariorum, Aleurocanthus spiniferus, Dialeurodes citri Ashm, Bemisia myricae Kuwana, Aleurocybotus indicus David et Subramaniam, Aleurodicus dispersus, Oligonychus baipisongis, Oligonychus karamatus, Oligonychus rubicundus, Eotetranychus albus, Eotetranychus bailae, Eotetranychus camelliae, Tetranychus neocaledonicus, Tetranychus phaselus, Tetranychus urticae, Tetranychus cinnabarinus, Schizotetranychus baltazarae, Schizotetranychus bambusae, Schizotetranychus elongatus, Mixonychus aestiva, Mixonychus ganjuis, Panonychus citri, Panonychus caglei, Allonychus bambusae, Allonychus wuyinicus, Stigmaeopsis celarius, Mononychellus georgicus, Acanthonychus jiangfengensis* and *Amphitetranychus viennensis.*

In some embodiments of the present disclosure, the pests may further be selected from *Psylla chinensis Yang et Li, Cicadellidae, Liriomyza, Chrysoperla sinica Tjeder, Solenopsis invicta,* termites, borers, mosquitoes, flies, *Blattaria,* flea, etc.

The "insecticidal" of the present disclosure refers to killing and/or controlling pests.

The "controlling" of the present disclosure refers to including but not limited to, any insect killing, growth regulation, or pestistatic activity (inhibiting or interfering with the normal life cycle of pests) including, for example, sterilization activity, which prevents the production of eggs or sperms, results in the death of the sperms or the eggs, or causes serious damage to genetic materials. The additional activities intended to be encompassed within the scope of the term "controlling" include preventing larvae from developing into mature offsprings, regulating eclosion of pests from eggs (including preventing hatching), degrading and choking egg materials, reducing gut motility, inhibiting chitin formation, disrupting mating or sexual communication, and preventing feeding activity (anti-feedant).

The "repellent" or "repelling" of the present disclosure means hindering pests from landing on or climbing onto the surfaces to which the *Zingiberaceae* plant extract or the insecticidal composition has been applied or introduced, and/or promoting the pests to leave the surfaces to which the *Zingiberaceae* plant extract or the insecticidal composition has been applied or introduced.

The "surface" or "target surface" of the present disclosure includes the surfaces to which an insecticide is applied or is to be applied. Such surfaces may include, for example, surfaces where pests may contact or be exposed to the applied insecticide, surfaces where eggs are laid, and/or surfaces that have been or are suspected of being infested with the pests.

The "preventing spawning" of the present disclosure refers to preventing spawning of the pests, and/or reducing the number of eggs typically laid by the pests.

The "preventing hatching" of the present disclosure refers to preventing or delaying the hatching of larvae from eggs.

The "insecticide" of the present disclosure refers to an agent capable of controlling and/or killing the pests.

In some embodiments, the use method of any composition of the present disclosure includes direct application, and dilution with a suitable carrier for delivery as a spray ready for use, or is in the concentrated form to be diluted and applied.

In the present disclosure, in order to obtain a desired effect, in some embodiments, the amount of the extract or the composition of the extract (insecticidal composition) is changed depending on various factors, such as crops to be protected, the type of pests, the degree of infection, the method of application, the environment of application, the form of application, etc.

In the present disclosure, the effective amount is not particularly limited. For example, in the field use, a dose of the extract or the composition of the extract (insecticidal composition) may be applied at 10 g to 1 Kg per hectare for the purpose of providing sufficient control.

In the present disclosure, the killing and/or controlling pests, and/or repelling the pests, and/or preventing or reducing spawning of the pests, and/or preventing or reducing hatching of pest eggs is not limited to the field of agriculture. Wherever there is a need to kill and/or control the pests, and/or repelling the pests, and/or preventing or reducing spawning of the pests, and/or preventing or reducing hatching of pest eggs, it should be within the protection scope of the present disclosure.

The beneficial effects of the present disclosure includes but is not limited to:

(1) The excellent insect-resistant activity of *Zingiberaceae* plant extracts *(Zingiber officinale* and *Kaempferia galanga)* on pests such as agricultural pest mites and thrips for the first time.

(2) The extraction process is optimized to increase the insecticidal, ovicidal and repellent activities of the *Zingiberaceae* plant extracts.

(3) The synergistic effect of the mixture of extracts of different *Zingiberaceae* plants is found.

Specifically, firstly the control effect of the *rhizoma zingiberis recens* extract by a mixed solvent of ethanol and ethyl acetate is obviously improved compared with that of a single solvent extract; and secondly, the mixture of the *rhizoma zingiberis recens* extract by ethanol and ethyl acetate, and the *rhizoma kaempferia* volatile oil obviously improves the pest control effect and also plays the synergistic effect.

## DETAILED DESCRIPTION OF EMBODIMENTS

The following clearly and completely describes the technical solutions of the present disclosure. Apparently, the described examples are merely a part rather than all of the examples of the present disclosure. All the other examples obtained by those skilled in the art based on the examples of the present disclosure without creative efforts should fall within the protection scope of the present disclosure. It should be noted that the processes that are not specifically described in detail below can be implemented or understood by those skilled in the art with reference to the prior art. All of the used reagents or instruments which are not specified with manufacturers are conventional commercially-available products.

When a range of values is provided, it is understood that each intervening value (to the tenth of the unit of the lower limit unless the context clearly indicates otherwise) between the upper and lower limits of that range and any other stated or intervening value in that stated range are encompassed within the embodiments of the present disclosure. The upper and lower limits of these smaller ranges may independently define the smaller ranges. It is understood that these smaller ranges are intended to be encompassed within the embodiments of the present disclosure, and subject to any specifically excluded limit in the stated range.

Unless otherwise defined, all technical and scientific terms used herein have the same meaning as commonly understood by one of ordinary skilled in the art to which the present disclosure pertains. Although any methods and materials similar or equivalent to those described herein may also be used in the practice or testing of the embodiments of the present disclosure, the preferred methods and materials are described in order to avoid unnecessarily obscuring the disclosure.

In the specific embodiments of the present disclosure, the *Zingiber officinale* is picked in the field and the *Kaempferia galanga* is commercially available.

The *rhizoma zingiberis recens* extract, the *rhizoma zingiberis recens* volatile oil, the *rhizoma kaempferia* extract and the *rhizoma kaempferia* volatile oil may be commercially available, and may also be prepared by using a conventional extraction method. The extraction methods in the following examples of the present disclosure only refer to raw materials used in preparation experiments of common general knowledge and are not understood to limit the acquisition mode of the raw materials.

In the specific embodiments of the present disclosure, other raw materials whose preparation methods are not shown may all be commercially available or may be prepared by an existing method.

**Example 1**

**[Method for preparing experimental extract]**

A proper amount of *Zingiber officinale* herb and *rhizoma zingiberis recens* coarse powders was taken and respectively subjected to ultrasonic extraction twice by one solvent of water, ethanol (absolute ethanol), ethyl acetate and methanol at a material-to-liquid ratio of 1:40 for 1 h. Two extracts were combined and concentrated under reduced pressure to dryness to respectively obtain a *Zingiber officinale* herb extract (a water extract, an ethanol extract, an ethyl acetate extract and a methanol extract) and a *rhizoma zingiberis recens* extract (a water extract, an ethanol extract, an ethyl acetate extract and a methanol extract).

A proper amount of *Kaempferia galanga* herb and *rhizoma kaempferia* coarse powders was taken and respectively subjected to ultrasonic extraction twice by one solvent of water, ethanol (absolute ethanol), ethyl acetate and methanol at a material-to-liquid ratio of 1:40 for 1 h. Two extracts were combined and concentrated under reduced pressure to dryness to respectively obtain a *Kaempferia galanga* herb extract (a water extract, an ethanol extract, an ethyl acetate extract and a methanol extract) and a *rhizoma kaempferia* extract (a water extract, an ethanol extract, an ethyl acetate extract and a methanol extract).

A proper amount of the *Zingiber officinale* herb and *rhizoma zingiberis recens* coarse powders was taken and respectively added into a steam distillation device at a material-to-liquid ratio of 1:10, a heating device was started until no more volatile oil flew out, after the heating was stopped, the materials were naturally cooled to room temperature, and volatile oils were collected from a volatile oil extraction device to respectively obtain a *Zingiber officinale* herb volatile oil and a *rhizoma zingiberis recens* volatile oil.

A proper amount of the *Kaempferia galanga* herb and *rhizoma kaempferia* coarse powders was taken and respectively added into a steam distillation device at a material-to-liquid ratio of 1:10, a heating device was started until no more volatile oil flew out, after the heating was stopped, the materials were naturally cooled to room temperature, and volatile oils were collected from a volatile oil extraction device to respectively obtain a *Kaempferia galanga* herb volatile oil and a *rhizoma kaempferia* volatile oil.

The term "herb" refers to the overground part of a plant.

**[Indoor bioactivity assay for adult mites (*Tetranychus cinnabarinus* for example)]**

A double-sided adhesive tape with the length of 4 cm was adhered to one end of a glass slide. *Tetranychus cinnabarinus* was gently picked up by using a small brush pen, the back of the *Tetranychus cinnabarinus* was gently adhered to the adhesive tape, and mite feet, antennae and mouthparts should not be adhered. At least 30 mites or more were adhered to each glass slide, neatly arranged, and then placed into a clean culture dish. Filter paper was put into the culture dish and kept wet, and the culture dish was covered. After 2 h, each mite was observed by a stereo microscope. If the mite died, the mite was removed. If the number of the mites was less than 30, the mites needed to be complemented. A test insecticide (when the insecticide of The present disclosure was used, a proper amount, such as 10%, of absolute ethanol was used for preparation, a surfactant, such as 5% of castor oil polyoxyethylene ether, was added, and sterile water was supplemented; and a solvent control was that the components of the solvent of the test reagent, the surfactant, etc. were not changed, and only the test sample was changed into the sterile water with the same weight) was ensured to be uniformly dispersed in water. The insecticide was prepared according to the experimental design concentration (Table 1), then one end of the glass slide adhered with the healthy Tetranychus cinnabarinus was immersed into the prepared insecticide, the glass slide was slightly shaken and taken out after immersed for 5 s. Redundant insecticide was absorbed by using absorbent paper, then the glass slide was placed in the culture dish, the culture dish was covered after the insecticide was air-dried. The culture dish was placed in an environment at the temperature of 25°C for culture (the adhered mites were placed for a period of time before subjected to microscopic examination, such that the experimental errors may be reduced, for example, some mites died naturally nonpharmacologically after adhering, etc.). After 72 h, the death number of *the Tetranychus cinnabarinus* was investigated and recorded under the stereo microscope, the *Tetranychus cinnabarinus* was lightly touched by the small brush pen, and the *Tetranychus cinnabarinus* without any reaction was regarded as dead. The control effect is calculated according to the following equation.

Insect population reduction rate (%) = (number of insect population in treatment group before application - number of live insects in treatment group after application)/number of insect population in treatment group before application×100 Control effect (%) = (insect population reduction rate in treatment group - insect population reduction rate in control group)/(100 - insect population reduction rate in control group) × 100

**[Indoor bioactivity assay for mite eggs (*Tetranychus cinnabarinus* for example)]**

Twenty female adult *Tetranychus cinnabarinus* was transferred to a broad bean leaf disc with the diameter of 2.0 cm (wetted filter paper at lower end), and covered with a culture dish with cover for culturing under moisture. The adult mites were removed within 36 h and the leaf disc carrying eggs was subjected to counting by microscopic examination. The base number of the eggs in each leaf disc was microscopically investigated and recorded prior to insecticide soaking. The leaf disc carrying the mite eggs was soaked in clean water for 10 s and taken out for culturing under moisture. Each treatment was repeated for 3 times or more. The treated mite eggs and leaf disc were cultured under normal conditions. After 5 days of the application, the hatching of the eggs of the *Tetranychus cinnabarinus* was investigated. The control effect is calculated according to the following equation.

$$\text{Hatchability (\%)} = \text{number of hatched eggs/total number of treated eggs} * 100$$

Control effect (%) = (hatchability in control plot - hatchability in treatment plot)/hatchability in control plot* 100

**[Repelling test (thrips for example)]**

When a Y-shaped olfactometer was used for testing behaviors of adult thrips, a smell source bottle containing a test substance was connected to one side arm of the Y-shaped olfactometer, and the other two sides were connected with a smell source bottle containing liquid paraffin as a control. Ventilation was performed for 5 min to fill a pipeline with a smell. The air flow of the four-arm olfactometer was controlled at 200 mL/min, the indoor temperature was controlled at $(25\pm1)°C$, and the relative humidity was 60%-80%. The adult thrips subjected to starvation treatment for 5 h were introduced into basal arm end of the Y-shaped olfactory glass tube for a single test for 10 min. When the adult thrips climbed to a position exceeding 1/3 of a side arm connecting to the smell source bottle for 30 s or more, it was recorded that the adult thrips selected the arm, a positive reaction was generated and attraction was recorded. If the adults crawled to the other side arm, a negative reaction was generated and repelling was recorded. If no selection was made within 5 min, no reaction was recorded. Five test thrips were assayed each treatment, which was repeated 3 times. The control was tested with the liquid paraffin as a smell source agent. Each thrip was tested only once in the test. Repellency rate is calculated according to the following equation.

$$\text{Repellency rate (\%)} = \text{number of repelled thrips/total number of thrips} * 100$$

**[Thrips egg test]**

10 thrips were transferred to a kidney bean leaf disc with the diameter of 2.0 cm (wetted filter paper at lower end), and covered with a culture dish with cover for culturing under moisture. The adult insects were removed 24 h after spawning. The leaf disc carrying the thrip eggs was soaked in clean water for 30 s and taken out for culturing under moisture. Each treatment was repeated for 3 times or more. The treated leaf disc was cultured under normal conditions. After 7 days of the application, the hatching of thrip larvae was investigated. The control effect is calculated according to the following equation.

Control effect (%) = ((number of larvae in control plot - number of larvae in treatment plot)/number of larvae in control plot)*100

**[Adult thrip test]**

A hydroponic kidney bean seedling only with one true leaf was placed aside a plant with thrips for 24 h until the adult insects climbed onto the leaves for later use; or the robustly grown thrips were lightly picked with an end of a wetted brush pen and transferred to the treated kidney bean seedling with 50 insects or more per plant.

The base number of insect population on each treated plant was investigated before insecticide application, and smaller and dead insect bodies were removed, such that the size of each treated insect body was basically consistent and the number of the treated insect bodies was 50 or more. A test insecticide was sprayed on the corresponding test plant by using a spray bottle and the front and back surfaces of the leaves (the application amount was appropriate when the insecticide on the leaves did not drip down) were both applied with the insecticide. After the application, the test seedling was cut from the leaf end to the position with the stem length of 10 cm and fixed on a 25-mL plastic cup with wet hydroponic cotton (a layer of blow-molded paper needed to be placed at the upper end of the hydroponic cotton to prevent insects from falling onto the hydroponic cotton to influence a test result investigation), water was added into the cup, finally, the treated test seedling was placed in a round plastic packing box, a 120-mesh gauze was laid, and then the round plastic packing box was sealed by a perforated box cover and placed in an environment at 25°C for culture.

After the application for 48 h, the insect bodies were lightly touched by a small brush pen and no reaction was regarded to be dead. The control effect is calculated according to the following equation.

Insect population reduction rate (%) = number of dead insects in treatment group after application/total number of insect population in treatment group after application$\times$100

Control effect (%) = (insect population reduction rate in treatment group - insect population reduction rate in blank group)/(100 - insect population reduction rate in blank group)$\times$100

Note: 1) the total insect population in the treatment group after the application refers to the base number of insect population (the sum of the number of live insects and the number of dead insects) after the application, but does not refer to the base number of insect population recorded before the application (a part of thrips may fly away and lose in the application process, such that the base number of insect population before the application is greater than the base number of insect population actually treated).

Table 1 Each treatment condition

| No. | Treatment | Dilution ratio | Final concentration (mg/mL) |
|---|---|---|---|
| 1 | *Kaempferia galanga* herb volatile oil | 250 times | 4 |
| 2 | *Kaempferia galanga* herb water extract | 250 times | 4 |
| 3 | *Kaempferia galanga* herb ethanol extract | 250 times | 4 |
| 4 | *Kaempferia galanga* herb ethyl acetate extract | 250 times | 4 |
| 5 | *Kaempferia galanga* herb methanol extract | 250 times | 4 |
| 6 | *Rhizoma kaempferia* volatile oil | 250 times | 4 |
| 7 | *Rhizoma kaempferia* water extract | 250 times | 4 |
| 8 | *Rhizoma kaempferia* ethanol extract | 250 times | 4 |
| 9 | *Rhizoma kaempferia* ethyl acetate extract | 250 times | 4 |
| 10 | *Rhizoma kaempferia* methanol extract | 250 times | 4 |
| 11 | *Zingiber officinale* herb volatile oil | 250 times | 4 |
| 12 | *Zingiber officinale* herb water extract | 250 times | 4 |
| 13 | *Zingiber officinale* herb ethanol extract | 250 times | 4 |
| 14 | *Zingiber officinale* herb ethyl acetate extract | 250 times | 4 |
| 15 | *Zingiber officinale* herb methanol extract | 250 times | 4 |
| 16 | *Rhizoma zingiberis recens* volatile oil | 250 times | 4 |
| 17 | *Rhizoma zingiberis recens* water extract | 250 times | 4 |
| 18 | *Rhizoma zingiberis recens* ethanol extract | 250 times | 4 |
| 19 | *Rhizoma zingiberis recens* ethyl acetate extract | 250 times | 4 |
| 20 | *Rhizoma zingiberis recens* methanol extract | 250 times | 4 |

(continued)

| No. | Treatment | Dilution ratio | Final concentration (mg/mL) |
|---|---|---|---|
| 21 | Solvent control | 250 times | - |
| 22 | Blank control | - | - |

Table 2 Indoor bioactivity assay results of *Tetranychus cinnabarinus*/*thrip* adults and eggs

| No. | Control effect of adult *Tetranychus cinnabarinus* (%) | Control effect of *Tetranychus cinnabarinus* eggs (%) | Control effect of adult thrips (%) | Control effect of thrip eggs (%) |
|---|---|---|---|---|
| 1 | 58.72 | 28.39 | 23.64 | 3.57 |
| 2 | 19.43 | -6.77 | 7.65 | -10.71 |
| 3 | 58.88 | 65.26 | 33.11 | 32.14 |
| 4 | 34.83 | 51.65 | 26.27 | 41.07 |
| 5 | 49.80 | 56.91 | 37.81 | 19.64 |
| 6 | 75.26 | 77.66 | 53.36 | 58.93 |
| 7 | 53.59 | 28.89 | 12.18 | -16.07 |
| 8 | 89.86 | 85.60 | 60.80 | 60.71 |
| 9 | 43.28 | 69.50 | 32.37 | 32.14 |
| 10 | 83.77 | 67.42 | 35.33 | 33.93 |
| 11 | 60.11 | 12.05 | 38.02 | 16.07 |
| 12 | 30.07 | 21.64 | 8.84 | -7.14 |
| 13 | 73.28 | 62.73 | 28.74 | 25.00 |
| 14 | 39.05 | 71.02 | 14.27 | 41.07 |
| 15 | 79.75 | 69.11 | 24.25 | 10.71 |
| 16 | 75.04 | 58.56 | 37.59 | 37.50 |
| 17 | 57.61 | 17.65 | 33.95 | 10.71 |
| 18 | 99.30 | 82.77 | 69.66 | 60.71 |
| 19 | 68.39 | 33.20 | 52.10 | 23.21 |
| 20 | 88.31 | 65.22 | 45.81 | 32.14 |
| 21 | 9.53 | 1.98 | 3.11 | -17.86 |
| 22 | - | - | - | - |

Table 3 Indoor bioactivity assay results of repelling *Tetranychus cinnabarinus*/thrips

| No. | Repellency rate of adult *Tetranychus cinnabarinus* (%) | Repellency rate of thrips (%) |
|---|---|---|
| 1 | 53.33 | 60.00 |
| 2 | 26.67 | 0.00 |
| 3 | 20.00 | 13.33 |
| 4 | 33.33 | 40.00 |
| 5 | 33.33 | 33.33 |
| 6 | 46.67 | 80.00 |
| 7 | 20.00 | 6.67 |
| 8 | 6.67 | 13.33 |

(continued)

| No. | Repellency rate of adult *Tetranychus cinnabarinus* (%) | Repellency rate of thrips (%) |
|---|---|---|
| 9 | 33.33 | 46.67 |
| 10 | 20.00 | 33.33 |
| 11 | 66.67 | 46.67 |
| 12 | 20.00 | 20.00 |
| 13 | 20.00 | 0.00 |
| 14 | 13.33 | 6.67 |
| 15 | 20.00 | 20.00 |
| 16 | 20.00 | 53.33 |
| 17 | 6.67 | 13.33 |
| 18 | 13.33 | 33.33 |
| 19 | 13.33 | 46.67 |
| 20 | 33.33 | 0.00 |
| 21 | 0.00 | 6.67 |
| 22 | 0.00 | 0.00 |

It can be known from results in Tables 2 and 3 that compared with the adult thrips, the *Zingiberaceae* plant extract has a better overall effect on the *Tetranychus cinnabarinus.* The *rhizoma zingiberis recens* ethanol extract has the most excellent effect on the adult *Tetranychus cinnabarinus* and thrips. At the same time, a *rhizoma kaempferia* ethanol extract also has an obvious effect on inhibiting the insects. Besides, the phenomenon is also shown on the *Tetranychus cinnabarinus* eggs and the thrip eggs. The two extracts also have the most obvious effect, which indicates that the main substance for inhibiting the insects and the insect eggs is probably mainly in the ethanol extract. The repellent activity of the volatile oil is obviously better than that of the extract, probably because more volatile substances exist in the volatile oil. The repellent activity of the rhizome volatile oil of the two *Zingiberaceae* plants is better than that of the herb volatile oil. In addition, the *rhizoma kaempferia* volatile oil has an obvious repelling effect on the adult thrips and the *rhizoma zingiberis recens* ethanol extract has an obvious repelling effect on the thrips.

**Example 2**

*Rhizoma zingiberis recens* was sliced, put into a 60°C oven for drying for 24 h, crushed, and sieved with a 40-mesh sieve to obtain a coarse powder. 100 g of the *rhizoma zingiberis recens* coarse powder was taken and put into a reflux device, ethanol, ethyl acetate, or an ethanol-ethyl acetate mixed solvent (ratio of 1:1, 2:1 and 4:1) was respectively added, the reflux device was started and heated, and the coarse powder was subjected to reflux extraction twice for 2 h at a material-to-liquid ratio of 1:40. The extracts were filtered and concentrated to dryness. The extracts were diluted to a lower concentration according to the bioactivity assay in example 1 and the control activity of adult *Tetranychus cinnabarinus* was observed.

Table 4 Effects of different solvents of *rhizoma zingiberis recens* extract at low concentration

| Solvent selection | Concentration (mg/mL) | Control effect of adult *Tetranychus cinnabarinus* (%) |
|---|---|---|
| Ethanol | | 56.83 |
| Ethyl acetate | 2 | 48.54 |
| Ethanol+ethyl acetate (1:1) | | 70.47 |
| Ethanol+ethyl acetate (2:1) | 1 | 69.58 |
| Ethanol+ethyl acetate (4:1) | 1 | 83.02 |

It can be seen from the results in Table 4 that when the extract concentration is reduced, the control effect on the pests is reduced. However, under the same concentration, the ethanol-ethyl acetate mixed solvent is used for extraction at the same time, and the pest control effect of the extract is obviously better than that of a single solvent. Further, when the ratio of the ethanol to the ethyl acetate is 4:1, the control effect can be 80% at the concentration of 1 mg/mL. It may be considered as a preferable solvent.

## Example 3

### [Solvent extraction method of *rhizoma zingiberis recens*]

*Rhizoma zingiberis recens* was sliced, put into a 60°C oven for drying for 24 h, crushed, and sieved with a 40-mesh sieve to obtain a coarse powder. 100 g of the *rhizoma zingiberis recens* coarse powder was taken and put into a reflux device, a mixed solvent of two solvents of ethyl acetate and ethanol was added, the reflux device was started and heated, and the coarse powder was subjected to reflux extraction. The extract was filtered and concentrated to dryness to obtain a *rhizoma zingiberis recens* extract.
The extraction conditions are as follows: a material-to-liquid ratio is 1:40, the extraction time is 2 h, a solvent ratio (ethyl acetate:ethanol) = 1:4, and the extraction times is 3.

### [Solvent extraction method of *rhizoma kaempferia*]

*Rhizoma kaempferia* was sliced, put into a 60°C oven for drying for 24 h, crushed, and sieved with a 40-mesh sieve to obtain a coarse powder. 100 g of the *rhizoma kaempferia* coarse powder was taken and put into a reflux device, a mixed solvent of two solvents of ethyl acetate and ethanol was added, the reflux device was started and heated, and the coarse powder was subjected to reflux extraction. The extract was filtered and concentrated to dryness to obtain a *rhizoma kaempferia* extract.
The extraction conditions are as follows: a material-to-liquid ratio is 1:20, the extraction time is 4 h, a solvent ratio (ethyl acetate:ethanol) = 1:4, and the extraction times is 2.

### [Extraction method of *rhizoma zingiberis recens* volatile oil]

*Rhizoma zingiberis recens* was sliced, put into a 60°C oven for drying for 24 h, crushed, and sieved with a 40-mesh sieve to obtain a coarse powder. 500 g of the *rhizoma zingiberis recens* coarse powder was taken and added into a volatile oil device, a certain amount of an aqueous solution containing sodium chloride was added, a heating device was started, and the solution was distilled for 3-10 h to obtain *rhizoma zingiberis recens* volatile oil.
The extraction conditions are as follows: a material-to-liquid ratio is 1:20, the distillation time is 5 h, and the amount of sodium chloride is 2%.

### [Extraction method of *rhizoma kaempferia* volatile oil]

*Rhizoma kaempferia* was sliced, put into a 60°C oven for drying for 24 h, crushed, and sieved with a 40-mesh sieve to obtain a coarse powder. 500 g of the *rhizoma kaempferia* coarse powder was taken and added into a volatile oil device, a certain amount of an aqueous solution containing sodium chloride was added, a heating device was started, and the solution was distilled for 3-10 h to obtain *rhizoma kaempferia* volatile oil.
The extraction conditions are as follows: a material-to-liquid ratio is 1:20, the distillation time is 5 h, and the amount of sodium chloride is 2%.

## Example 4

Based on the optimal extraction conditions of the *rhizoma zingiberis recens* extract, the *rhizoma zingiberis recens* volatile oil, the *rhizoma kaempferia* extract and the *rhizoma kaempferia* volatile oil prepared in example 3, corresponding extracts were respectively prepared. A combination ratio screening experiment was performed on *Tetranychus cinnabarinus* adults and eggs according to the bioactivity assay in example 1.

Table 5 Screening of combination of four *Zingiberaceae* extracts on activity of adult *Tetranychus cinnabarinus*

| No. | Treatment | Concentration (mg/mL) | Control effect of adult *Tetranychus cinnabarinus* for 72 h (%) |
|---|---|---|---|
| 1 | *Rhizoma zingiberis recens* extract (T1) | 1 | 80.15 |
| 2 | *Rhizoma zingiberis recens* volatile oil (T2) | 1 | 44.34 |

(continued)

| No. | Treatment | Concentration (mg/mL) | Control effect of adult *Tetranychus cinnabarinus* for 72 h (%) |
|---|---|---|---|
| 3 | *Rhizoma kaempferia* extract (T3) | 1 | 70.23 |
| 4 | *Rhizoma kaempferia* volatile oil (T4) | 1 | 66.11 |
| 5 | T1+T3=9:1 | 0.9+0.1 | 80.42 |
| 6 | T1+T3=7:3 | 0.7+0.3 | 82.31 |
| 7 | T1+T3=5:5 | 0.5+0.5 | 77.56 |
| 8 | T1+T3=3:7 | 0.3+0.7 | 67.80 |
| 9 | T1+T3=1:9 | 0.1+0.9 | 64.88 |
| 10 | T1+T4=9:1 | 0.9+0.1 | 77.47 |
| 11 | T1+T4=7:3 | 0.7+0.3 | 96.50 |
| 12 | T1+T4=5:5 | 0.5+0.5 | 89.86 |
| 13 | T1+T4=3:7 | 0.3+0.7 | 84.35 |
| 14 | T1+T4=1:9 | 0.1+0.9 | 67.10 |
| 15 | T2+T3=9:1 | 0.9+0.1 | 48.62 |
| 16 | T2+T3=7:3 | 0.7+0.3 | 45.97 |
| 17 | T2+T3=5:5 | 0.5+0.5 | 59.54 |
| 18 | T2+T3=3:7 | 0.3+0.7 | 76.92 |
| 19 | T2+T3=1:9 | 0.1+0.9 | 62.71 |
| 20 | T2+T4=9:1 | 0.9+0.1 | 46.95 |
| 21 | T2+T4=7:3 | 0.7+0.3 | 51.01 |
| 22 | T2+T4=5:5 | 0.5+0.5 | 50.74 |
| 23 | T2+T4=3:7 | 0.3+0.7 | 55.12 |
| 24 | T2+T4=1:9 | 0.1+0.9 | 57.14 |
| 25 | Solvent control | / | 4.98 |

It can be seen from Table 5 that when the ratio of the *rhizoma zingiberis recens* extract to the *rhizoma kaempferia* volatile oil is 7:3, the insecticidal activity is the best.

Table 6 Screening of combination of four *Zingiberaceae* extracts on activity of *Tetranychus cinnabarinus* eggs

| No. | Treatment | Concentration (mg/mL) | Control effect of *Tetranychus cinnabarinus* eggs (%) |
|---|---|---|---|
| 1 | *Rhizoma zingiberis recens* extract (T1) | 1 | 52.05 |
| 2 | *Rhizoma zingiberis recens* volatile oil (T2) | 1 | 31.76 |
| 3 | *Rhizoma kaempferia* extract (T3) | 1 | 68.04 |
| 4 | *Rhizoma kaempferia* volatile oil (T4) | 1 | 60.54 |
| 5 | T1+T3=9:1 | 0.9+0.1 | 54.89 |
| 6 | T1+T3=7:3 | 0.7+0.3 | 54.42 |
| 7 | T1+T3=5:5 | 0.5+0.5 | 45.16 |
| 8 | T1+T3=3:7 | 0.3+0.7 | 81.82 |
| 9 | T1+T3=1:9 | 0.1+0.9 | 70.54 |
| 10 | T1+T4=9:1 | 0.9+0.1 | 68.67 |

(continued)

| No. | Treatment | Concentration (mg/mL) | Control effect of *Tetranychus cinnabarinus* eggs (%) |
|---|---|---|---|
| 11 | T1+T4=7:3 | 0.7+0.3 | 80.94 |
| 12 | T1+T4=5:5 | 0.5+0.5 | 73.47 |
| 13 | T1+T4=3:7 | 0.3+0.7 | 77.15 |
| 14 | T1+T4=1:9 | 0.1+0.9 | 56.68 |
| 15 | T2+T3=9:1 | 0.9+0.1 | 38.19 |
| 16 | T2+T3=7:3 | 0.7+0.3 | 45.14 |
| 17 | T2+T3=5:5 | 0.5+0.5 | 53.35 |
| 18 | T2+T3=3:7 | 0.3+0.7 | 61.53 |
| 19 | T2+T3=1:9 | 0.1+0.9 | 60.55 |
| 20 | T2+T4=9:1 | 0.9+0.1 | 25.29 |
| 21 | T2+T4=7:3 | 0.7+0.3 | 41.00 |
| 22 | T2+T4=5:5 | 0.5+0.5 | 54.77 |
| 23 | T2+T4=3:7 | 0.3+0.7 | 44.98 |
| 24 | T2+T4=1:9 | 0.1+0.9 | 49.44 |
| 25 | Solvent control | / | 11.12 |

It can be seen from Table 6 that when the ratio of the *rhizoma zingiberis recens* extract to the *rhizoma kaempferia* volatile oil is 7:3 or 3:7, the ovicidal activity is greater than 80%. But the miticidal activity is not particularly remarkable when the ratio of the *rhizoma zingiberis recens* extract to the *rhizoma kaempferia* volatile oil is 3:7. In summary, the overall activity is the best when the ratio of the *rhizoma zingiberis recens* extract to the *rhizoma kaempferia* volatile oil is 7:3.

Example 5

Based on the ratio of the *rhizoma zingiberis recens* extract to the *rhizoma kaempferia* volatile oil of 7:3 under the extraction conditions in example 3, a mixture of the *rhizoma zingiberis recens* and the *rhizoma kaempferia* was prepared and verified based on the test method of example 1. The results are as the following table.

Table 7 Activity of mixture of *rhizoma zingiberis recens* and *rhizoma kaempferia* on adult *Tetranychus cinnabarinus*/ *Tetranychus urticae*/*Panonychus citri*, *Tetranychus cinnabarinus* eggs, and thrip adults and eggs

| Concentration (mg/mL) | Control effect of adult *Tetranychus cinnabarinus* (%) | Control effect of adult *Panonychus citri* (%) | Control effect of *Tetranychus urticae* (%) | Control effect of *Tetranychus cinnabarinus* eggs (%) | Control effect of adult thrips (%) | Control effect of thrip eggs (%) |
|---|---|---|---|---|---|---|
| 1 | 92.37 | 100 | 68.74 | 75.74 | 46.04 | 71.43 |

**Example 6**

Based on the ratio of the *rhizoma zingiberis recens* extract to the *rhizoma kaempferia* volatile oil of 7:3 under the extraction conditions in example 3, the mixture of the *rhizoma zingiberis recens* and the *rhizoma kaempferia* was prepared. The activities of *Spodoptera litura* and *Bemisia tabaci Gennadius* adults and eggs were tested based on the test method of example 1.

**[*Spodoptera litura* egg test]**

An egg block was cut into small blocks with about 60 eggs per block. The egg blocks together with spawning paper were soaked in a pre-prepared insecticide for 10 min, and taken out. An excessive solution adhered to the spawning paper and the egg blocks was sucked off with absorbent paper. Each egg block was placed into a glass test tube (with the height of 5.0 cm and the diameter of 2.5 cm, the same below). The glass test tube was sealed by using plastic paper with fine holes punched by an insect needle and placed in an artificial climate box with the temperature of $(24\pm1)°C$, the relative humidity of $(80\pm10)\%$ and the light period of L:D of 12:12 for culture. When the eggs grew to be hatched, castor leaves with the diameter of about 3 cm were added for feeding hatched larvae. The number of hatched and unhatched eggs of each egg block was checked and recorded. The egg mortality was calculated and corrected according to an equation. Each treatment was repeated 3 times. The test materials of each treatment group were regularly moisturized and the hatching of the eggs was observed. The number of the eggs hatched in each treatment was recorded on day 4 after the application, and the investigation results were recorded on an original book. According to the test requirements and the insecticide characteristics, the investigation time may be shortened or prolonged.

$$\text{Hatchability (\%)} = \text{number of hatched eggs/total number of treated eggs}*100$$

Control effect (%) = (hatchability in control plot - hatchability in treatment plot)/hatchability in control plot* 100.

### [*Spodoptera litura* larvae test]

Fresh and clean tobacco leaves were cut off and punched into small circular leaves with the diameter of 2.5 cm by using a circular puncher. Twelve leaf discs were picked as a group, wrapped with gauze after scattered, or directly clamped with forceps and soaked in a test insecticide. The leaves were soaked in the prepared solution for 10 s and taken out. The redundant insecticide in the gauze was sucked off by using filter paper. The blank control was first treated, then the operation was repeated according to the test dose from low to high, the gauze and absorbent paper were replaced after each treatment, and appliances such as tweezers were cleaned. The soaked leaf discs were spread on the filter paper at $25\pm1°C$ to be naturally air-dried. Then 15 3-instar *Spodoptera litura* larvae were picked, wrapped with gauze and soaked in the prepared solution for 10 s respectively. After the larvae were taken out, the redundant insecticide in the gauze was sucked off by using filter paper. The blank control was first treated, then the operation was repeated according to the test dose from low to high, the gauze and absorbent paper were replaced after each treatment, and insect-picking appliances such as tweezers were cleaned. When no obvious water drops or moisture existed on the surfaces of the leaf discs, 4 insecticide-soaked leaf discs and 15 insecticide-soaked *Spodoptera litura* larvae were inoculated into a culture dish. The culture dish was placed under the normal condition of the temperature of $25\pm1°C$ and the humidity of 60-80% for feeding and observation. According to the test requirements and the insecticide characteristics, the reaction condition of the test insects was observed regularly, and clean leaves or a feed were supplemented. 72 h after the application, the check was performed regularly and the number of dead insects of the treated Spodoptera litura larvae was respectively recorded. The corresponding determination standard of death of the insects is as follows: the insect bodies are lightly touched by tweezers and no reaction is regarded to be dead. The control effect is calculated according to the following equation.

Insect population reduction rate (%) = (base number of insect population in treatment group - number of live insects in treatment group after application)/number of total number of insect population in treatment group$\times100$

Control effect (%) = (insect population reduction rate in treatment group - insect population reduction rate in blank group)/(100 - insect population reduction rate in blank group)$\times100$

### [*Bemisia tabaci Gennadius* egg test]

Cucumber leaves were collected and punched into circular leaves with the diameter of 2 cm at the middle leaf vein of each leaf by using a puncher. Leaf discs were soaked into a test insecticide for 10 s, taken out, air-dried, and then transferred into a finger-shaped tube containing 12 g/L of water agar (the front of the leaves was downward). 30 adult insects were sucked into the tube to spawn for 24 h and the adult insects were removed. The leaves with the eggs were transferred into a culture dish containing 12 g/L of water agar (the front of the leaves was downward). The number of the eggs was counted under a microscope. Then the leaves were placed in an illumination incubator to be observed (the temperature of $(27\pm1)°C$, the humidity of $(70\pm5)\%$, and the light-dark period of 16 h:8 h]. After 5 days, the number of unhatched eggs was recorded under the microscope and the egg hatching inhibition rate was calculated. Each treatment was repeated 3 times.

$$\text{Hatchability (\%)} = \text{number of hatched eggs/total number of treated eggs}*100$$

Control effect (%) = (hatchability in control plot - hatchability in treatment plot)/hatchability in control plot*100.

**[Adult *Bemisia tabaci Gennadius* test]**

A double-pass glass tube (the diameter of 3cm and the length of 6 cm) was taken, a layer of opaque black cellophane was wrapped outside, a layer of parafilm (the area of the film was uniformly stretched to be 4-5 times of the original area) covered on one end of the double-pass glass tube, 200 μL of a test insecticide was taken on the wall of the double-pass glass tube, and the double-pass glass tube was rotated for one circle until the insecticide was uniformly distributed on the tube wall. After the insecticide was evaporated, then 200 μL of 30% sucrose water was added on the parafilm of the wall of the insecticide-containing container, and a layer of the parafilm covered thereon to prevent the feeding liquid from being evaporated. After 30 2-5-instar adult *Bemisia tabaci Gennadius* were put into the other end of the double-pass tube, the end was sealed by using absorbent paper. Three repeats were set in each group. The tube was placed in an artificial climate chamber (the temperature of 25±3°C, the humidity of 60%-70%, and the light-dark time ratio of 14 h:10 h), and the number of live insects was examined and recorded under a stereoscopic microscope at 48 h.

Insect population reduction rate (%) = (base number of insect population in treatment group - number of live insects in treatment group after application)/number of total number of insect population in treatment group $\times$ 100

Control effect (%) = (insect population reduction rate in treatment group - insect population reduction rate in blank group)/(100 - insect population reduction rate in blank group) $\times$ 100

Table 8 Mixture of *rhizoma zingiberis recens* and *rhizoma kaempferia* on activities of *Spodoptera litura* and *Bemisia tabaci Gennadius* adults and eggs

| Treatment | Concentration (mg/mL) | Control effect of adult *Spodoptera litura* (%) | Control effect of *Spodoptera litura* eggs (%) | Control effect of adult *Bemisia tabaci Gennadius* (%) | Control effect of *Bemisia tabaci Gennadius* eggs (%) |
|---|---|---|---|---|---|
| Mixture of *rhizoma zingiberis recens* and *rhizoma kaempferia* | 4 | 46.67 | 50.98 | 52.22 | 48.19 |
| Mixture of *rhizoma zingiberis recens* and *rhizoma kaempferia* | 2 | 20.00 | 26.24 | 32.22 | 13.78 |

By combining the data of examples 5 and 6, it can be known that even when the same insecticide is used, different control effects may also be achieved for different pests. The mixture of the *rhizoma zingiberis recens* and the *rhizoma kaempferia* of the present disclosure may bring extremely high control effect to agricultural pest mites at a low concentration (1 mg/mL). However, the control effect is relatively low to the *Spodoptera litura, Bemisia tabaci Gennadius*, etc. even if the concentration is as high as 2 mg/mL or 4 mg/mL. It can be known from this that the composition of the present disclosure may be particularly used for controlling agricultural pest mites.

**Example 7**

Based on the ratio of the *rhizoma zingiberis recens* extract to the *rhizoma kaempferia* volatile oil of 7:3 under the extraction conditions in example 3, the mixture of the *rhizoma zingiberis recens* and the *rhizoma kaempferia* was prepared. A soluble solution of 10% (by mass) of the mixture of the *rhizoma zingiberis recens* and the *rhizoma kaempferia* was prepared according to the following formula: 10% of the mixture, 20% of ethanol, 2% of calcium dodecyl benzene sulfonate, 2% of a castor oil ethoxy compound, 1% of tristyrylphenol ethoxylates, 5% of ethylene glycol and the balance of water. The mixture was subjected to a field test for *Panonychus citri*.

**[Field test for *Panonychus citri*]**

The test was performed in Dacao village, Shouan county, Sichuan province on September 30, 2024. There are a total of 4 treatments in the test and 2 citrus trees in each treatment. After the insecticide was prepared according to the experimental design, the whole leaf and the front and back surfaces of fruits of the citrus trees in each plot were uniformly sprayed until small water drops were formed. Meanwhile, the growth parts such as twigs and trunks of the fruit trees were also ensured to contact with the insecticide. Other insecticide and microbicides were not applied in the test period. Before the application, 6 marks were made in each plot respectively, the base number of insect population of each mark was counted, and there were 15 adult mites or more in each mark and 30 nymph mites or more in each mark. The number of the remaining live mites on the leaves was counted in each investigation after the application. The base number of insect population was investigated before the application and the number of remaining live insects was respectively investigated 3 times on days 1, 7 and 10 after the application.

Insect population reduction rate (%) = (number of insect population in treatment plot before application - number of insect population in treatment plot after application)/number of insect population in treatment plot before application] * 100 Control effect (%) = (insect population reduction rate in treatment plot - insect population reduction rate in control plot)/ (1 - insect population reduction rate in control plot)*100

Table 9 Field test of soluble solution of 10% of mixture of rhizoma zingiberis recens and rhizoma kaempferia on Panonychus citri (Sichuan, Pujiang)

| No. | Name of insecticide | Dilution ratio | Investigation site | Live mites before test | | | Day 1 after application | | Day 5 after application | | Day 10 after application | |
|---|---|---|---|---|---|---|---|---|---|---|---|---|
| | | | | Total number of mites | Adult mites | Mite larvae and nymph mites | Average mite population reduction rate (%) | Average control effect (%) | Average mite population reduction rate (%) | Average control effect (%) | Average mite population reduction rate (%) | Average control effect (%) |
| 1 | Soluble solution of 10% of mixture of *rhizoma zingiberis recens* and *rhizoma kaempferia* | 20 times (5 mg/mL) | ① | 53 | 19 | 34 | 94.06 | 94.07 | 87.95 | 89.04 | 86.05 | 83.23 |
| | | | ② | 47 | 11 | 36 | | | | | | |
| | | | ③ | 56 | 19 | 37 | | | | | | |
| | | | ④ | 56 | 26 | 30 | | | | | | |
| | | | ⑤ | 68 | 27 | 41 | | | | | | |
| | | | ⑤ | 59 | 23 | 36 | | | | | | |
| 2 | | 50 times (2 mg/mL) | ① | 50 | 8 | 42 | 88.29 | 88.32 | 81.61 | 83.28 | 75.13 | 70.09 |
| | | | ② | 60 | 7 | 53 | | | | | | |
| | | | ③ | 54 | 8 | 46 | | | | | | |
| | | | ④ | 51 | 5 | 46 | | | | | | |
| | | | ⑤ | 54 | 11 | 43 | | | | | | |
| | | | ⑥ | 51 | 15 | 36 | | | | | | |
| 3 | Bisulflufen (Weij ing) | 1500 times | ① | 84 | 38 | 46 | 94.99 | 95 | 94.55 | 95.04 | 92.55 | 91.04 |
| | | | ② | 43 | 18 | 25 | | | | | | |
| | | | ③ | 55 | 24 | 31 | | | | | | |
| | | | ④ | 113 | 33 | 80 | | | | | | |
| | | | | | | | | | | | | |
| | | | ⑤ | 68 | 10 | 58 | | | | | | |
| | | | ⑥ | 49 | 19 | 30 | | | | | | |

EP 4 751 568 A1

| No. | Name of insecticide | Dilution ratio | Investigation site | Live mites before test | | | Day 1 after application | | Day 5 after application | | Day 10 after application | |
|---|---|---|---|---|---|---|---|---|---|---|---|---|
| | | | | Total number of mites | Adult mites | Mite larvae and nymph mites | Average mite population reduction rate (%) | Average control effect (%) | Average mite population reduction rate (%) | Average control effect (%) | Average mite population reduction rate (%) | Average control effect (%) |
| CK | Clean water | - | ① | 48 | 17 | 31 | -0.28 | - | -9.99 | - | 16.84 | - |
| | | | ② | 48 | 10 | 38 | | | | | | |
| | | | ③ | 69 | 9 | 60 | | | | | | |
| | | | ④ | 53 | 11 | 42 | | | | | | |
| | | | ⑤ | 55 | 8 | 47 | | | | | | |
| | | | ⑥ | 53 | 19 | 34 | | | | | | |

EP 4 751 568 A1

Example 8 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:40, the extraction time is 2 h, a solvent ratio (ethyl acetate:ethanol) = 1:1, and the extraction times is 2.

Example 9 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:40, the extraction time is 4 h, a solvent ratio (ethyl acetate:ethanol) = 1:1, and the extraction times is 2.

Example 10 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:40, the extraction time is 2 h, a solvent ratio (ethyl acetate:ethanol) = 1:1, and the extraction times is 3.

Example 11 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:40, the extraction time is 2 h, a solvent ratio (ethyl acetate:ethanol) = 1:1, and the extraction times is 3.

Example 12 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:20, the extraction time is 2 h, a solvent ratio (ethyl acetate:ethanol) = 1:1, and the extraction times is 3.

Example 13 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:60, the extraction time is 2 h, a solvent ratio (ethyl acetate:ethanol) = 1:1, and the extraction times is 3.

Example 14 [Extraction method of *rhizoma zingiberis recens* and *rhizoma kaempferia*]

Referring to example 2, *rhizoma zingiberis recens* and/or *rhizoma kaempferia* were taken. The extraction conditions are as follows: a material-to-liquid ratio is 1:40, the extraction time is 2 h, a solvent ratio (ethyl acetate:ethanol) = 1:2, and the extraction times is 3.

Example 15 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:40, the distillation time is 5 h, and the amount of sodium chloride is 2%.

Example 16 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:60, the distillation time is 5 h, and the amount of sodium chloride is 2%.

Example 17 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:20, the distillation time is 3 h, and the amount of sodium chloride is 2%.

Example 18 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:20, the distillation time is 7 h, and the amount of sodium chloride is 2%.

Example19 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:20, the distillation time is 5 h, and the amount of sodium chloride is 4%.

Example 20 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:20, the distillation time is 5 h, and the amount of sodium chloride is 6%.

Example 21 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:40, the distillation time is 3 h, and the amount of sodium chloride is 2%.

Example 22 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:40, the distillation time is 7 h, and the amount of sodium chloride is 2%.

Example 23 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:40, the distillation time is 7 h, and the amount of sodium chloride is 4%.

Example 24 [Extraction method of *rhizoma zingiberis recens* and *rhizoma kaempferia* volatile oils]

Referring to example 3, *rhizoma zingiberis recens* and/or *rhizoma kaempferia* were taken. The extraction conditions are as follows: a material-to-liquid ratio is 1:40, the distillation time is 7 h, and the amount of sodium chloride is 6%.

**Example 25 [Component analysis of extract]**

The optimal extract combination of example 4 *(rhizoma zingiberis recens* extract and *rhizoma kaempferia* volatile oil = 7:3) was subjected to a full scan using a gas chromatography-tandem mass spectrometry and comparison was performed by an existing database. The concrete conditions are as follows: selective chromatographic column HP-5MS capillary column (30 m×250 μm×0.25 μm); column temperature of 60 °C, temperature programming: kept at 60°C for 1 min, kept at 40-120°C for 0 min, kept at 5-310°C for 0 min, running for 40.5 min, temperature of injection port of 280°C, and an auxiliary heater of 280°C; and no-shunt, ion source temperature of 280°C, and scan type: MS2 scans.

Table 10 GC-MS component analysis of *rhizoma zingiberis recens* and *rhizoma kaempferia* combined extract

| No. | Retention time | Compound name | Molecular mass | Peak area integral |
|-----|----------------|---------------|----------------|--------------------|
| 1 | 5.765min | D-borneol | 154.25 | 380933816 |

(continued)

| No. | Retention time | Compound name | Molecular mass | Peak area integral |
|---|---|---|---|---|
| 2 | 5.854min | linalool | 154.25 | 434618134 |
| 3 | 5.999min | $\alpha$-terpineol | 154.25 | 414703057 |
| 4 | 6.053min | Decanal | 156.26 | 489592991 |
| 5 | 6.395min | Nerol | 154.25 | 257398621 |
| 6 | 6.586min | Verbenol | 152.23 | 296170834 |
| 7 | 6.743min | Geraniol | 154.25 | 1229578792 |
| 8 | 6.991min | Citral | 152.23 | 405640431 |
| 9 | 8.763min | (Z)-3,7-dimethyl-2,6-octadien-1-ol acetate | 196.29 | 631876236 |
| 10 | 10.771min | $\alpha$-curcumene | 202.34 | 640695976 |
| 11 | 11.061min | $\alpha$-zingiberene | 204.35 | 1914932004 |
| 12 | 11.194min | $\alpha$-farnesene | 204.35 | 812862938 |
| 13 | 11.285min | 1H-benzocycloheptene,2,4a | 204.35 | 1089102762 |
| 14 | 11.616min | $\beta$-sesquiphellandrene | 204.35 | 1711407866 |
| 15 | 14.338min | Zingiberone | 194.23 | 1760108908 |
| 16 | 22.738min | 1-(2,4-dichlorophenoxy)propan-2-yl (2-fluoroethyl) sulfite | 331.19 | 74596828 |
| 17 | 24.981min | 3-Decen-5-one, 1-(4-hydroxy-3-methoxyphenyl)-, (3E)- | 276.37 | 342019227 |
| 18 | 25.129min | 6-paradol | 278.39 | 324265321 |
| 19 | 25.386min | 2-chloroethyl (1-(2,4-dichlorophenoxy)propan-2-yl) sulfite | 347.64 | 99449301 |
| 20 | 26.260min | 6-shogaol | 276.37 | 1563176342 |
| 21 | 26.825min | Gingerdione | 292.37 | 555967268 |
| 22 | 27.812min | 5-hydroxy-1-(4-hydroxy-3-methoxyphenyl)-3-decanone | 294.39 | 1280945262 |
| 23 | 29.262min | Diacetoxy-6-gingerdiol | 380.48 | 501765820 |
| 24 | 29.522min | 8-shogaol | 304.42 | 503415630 |
| 25 | 30.924min | 1-dehydro-6-gingerdione | 290.35 | 242036559 |
| 26 | 32.600min | 10-shogaol | 332.48 | 647027902 |
| 27 | 33.248min | 3,5-Tetradecanedione, 1-(4-hydroxy-3-methoxyphenyl)- | 348.28 | 559173680 |

Note: the compounds in the above table are obtained by alignment analysis using a search program of Agilent NIST MS Search 2.3.

**Example 26**

Based on the ratio of the *rhizoma zingiberis recens* extract to the *rhizoma kaempferia* volatile oil of 7:3 under the extraction conditions in example 3, a mixture of *rhizoma zingiberis recens* and *rhizoma kaempferia* was prepared. The mixture was respectively compounded with $\alpha$-zingiberene, zingiberone, $\alpha$-curcumene, 5-hydroxy-1-(4-hydroxy-3-methoxyphenyl)-3-decanone and 1-(2,4-dichlorophenoxy)propan-2-yl(2-fluoroethyl)sulfite (purity all greater than 85%). Based on the test method of example 1, the control effect on adult *Tetranychus cinnabarinus* was explored.

Based on its proposed concept of independent combined action, Bliss believes that when an insecticide and a miticide are mixed, the theoretical mortality rate P may be calculated by the following equation:

$$P = Pm + Pn(1-Pm)$$

Pm is the mortality (%) of a target when a first active component at the concentration of m; Pn is the mortality (%) of the target when a second active component at the concentration n.

If the actual mortality of the target is greater than the theoretical mortality P after the two active components are mixed at a certain concentration, the two active components are determined to have a synergistic effect when being mixed at a set concentration, otherwise, the two active components are determined to have an antagonistic effect.

Table 11

| No. | Treatment | Concentration (mg/mL) | Control effect of adult *Tetranychus cinnabarinus* for 72 h (%) | Theoretic al control effect (%) | Synerg ism |
|---|---|---|---|---|---|
| 1 | Mixture of *rhizoma zingiberis recens* and *rhizoma kaempferia* (T1) | 0.2 | 43.28 | / | / |
| 2 | | 0.1 | 21.31 | / | / |
| 3 | α-zingiberene (T2) | 4 | 39.01 | / | / |
| 4 | | 2 | 19.37 | / | / |
| 5 | T1: T2=1:40 | 0.1+4 | 49.34 | 52.01 | Not synergi stic |
| 6 | T1: T2=1:20 | 0.1+2 | 34.72 | 36.55 | Not synergi stic |
| 7 | T1: T2=1:10 | 0.2+2 | 48.52 | 54.27 | Not synergi stic |
| 8 | Zingiberone (T3) | 4 | 44.08 | / | / |
| 9 | | 2 | 25.64 | / | / |
| 10 | T1: T3=1:40 | 0.1+4 | 52.83 | 56.00 | Not synergi stic |
| 11 | T1: T3=1:20 | 0.1+2 | 37.62 | 41.49 | Not synergi stic |
| 12 | T1: T3=1:10 | 0.2+2 | 49.51 | 57.82 | Not synergi stic |
| 13 | α-curcumene (T4) | 0.8 | 15.43 | / | / |
| 14 | | 0.4 | 8.97 | / | / |
| 15 | T1: T4=1:8 | 0.1+0.8 | 36.42 | 33.45 | Synerg istic |
| 16 | T1: T4=1:4 | 0.1+0.4 | 35.18 | 28.37 | Synerg istic |
| 17 | T1: T4=1:2 | 0.2+0.4 | 52.35 | 48.37 | Synerg istic |
| 18 | 5-Hydroxy-1-(4-hy-droxy-3-met hoxy-phenyl)-3-decanone (T5) | 0.8 | 34.18 | / | / |
| 19 | | 0.4 | 21.55 | / | / |
| 20 | T1: T5=1:8 | 0.1+0.8 | 55.68 | 48.21 | Synerg istic |
| 21 | T1: T5=1:4 | 0.1+0.4 | 51.97 | 38.27 | Synergistic |
| 22 | T1: T5=1:2 | 0.2+0.4 | 72.61 | 55.50 | Synerg istic |
| 23 | 1-(2,4-dichlorophenoxy)propan-2-yl (2-fluoroethyl) sulfite (T6) | 0.8 | 43.67 | / | / |
| 24 | | 0.4 | 27.68 | / | / |
| 25 | T1: T6=1:8 | 0.1+0.8 | 62.38 | 55.67 | Synerg istic |
| 26 | T1: T6=1:4 | 0.1+0.4 | 61.43 | 50.96 | Synerg istic |
| 27 | T1: T6=1:2 | 0.2+0.4 | 75.94 | 58.98 | Synerg istic |

It can be known from the above table that the α-curcumene, the 5-hydroxy-1-(4-hydroxy-3-methoxyphenyl)-3-decanone and the 1-(2,4-dichlorophenoxy)propan-2-yl(2-fluoroethyl)sulfite were compounded with the mixture of the *rhizoma zingiberis recens* and *rhizoma kaempferia,* respectively, and the compounds have a synergistic effect on the control of the adult *Tetranychus cinnabarinus.* However, α-zingiberene and Zingiberone, when compounded separately with the mixtures of the *rhizoma zingiberis recens* and *rhizoma kaempferia,* do not generate synergistic effects.

**Claims**

1. An insecticidal composition, comprising a mixture of a *rhizoma zingiberis recens* extract and a *rhizoma kaempferia* extract at a ratio of (1-9):(9-1), wherein the *rhizoma zingiberis recens* extract is prepared by extracting *rhizoma zingiberis recens* with ethanol and ethyl acetate at a ratio of (1-4): 1; and the *rhizoma kaempferia* extract is a *rhizoma kaempferia* volatile oil.

2. The insecticidal composition according to claim 1, wherein the ratio of the *rhizoma zingiberis recens* extract to the *rhizoma kaempferia* extract is (7-9):(3-1).

3. The insecticidal composition according to claim 1, wherein the ratio of the *rhizoma zingiberis recens* extract to the *rhizoma kaempferia* extract is 7:3.

4. The insecticidal composition according to claim 1, wherein in the composition, the mixture of a *rhizoma zingiberis recens* extract and a *rhizoma kaempferia* extract accounts for 0.1-100% in the composition.

5. The insecticidal composition according to claim 1, wherein the composition further comprises a solvent; and the total concentration of the mixture of a *rhizoma zingiberis recens* extract and a *rhizoma kaempferia* extract is 0.1 mg/mL or more.

6. The insecticidal composition according to claim 1, wherein the composition further comprises a solvent; and the total concentration of the mixture of a *rhizoma zingiberis recens* extract and a *rhizoma kaempferia* extract is 0.1-1,000 mg/mL.

7. The insecticidal composition according to claim 1, wherein in addition to the mixture, the composition further comprises one or two or more of α-curcumene, 5-hydroxy-1-(4-hydroxy-3-methoxyphenyl)-3-decanone, and 1-(2,4-dichlorophenoxy)propan-2-yl(2-fluoroethyl)sulfite.

8. The insecticidal composition according to claim 1, wherein a dosage form of the composition comprises a soluble powder, a soluble granule, a soluble liquid, a dispersible liquid, an aqueous emulsion, a microemulsion, a microcapsule suspension concentrate, a seed treatment liquid and an aerosol.

9. A method for killing and/or controlling pests, and/or repelling the pests, and/or preventing or reducing spawning of the pests, and/or preventing or reducing hatching of pest eggs, wherein the method is exposing the pests and/or the pest eggs to a *Zingiberaceae* plant extract or the insecticidal composition according to any one of claims 4-11; the *Zingiberaceae* plant is selected from one or a combination of two or more of *Zingiber officinale, Kaempferia galanga, Alpinia galanga, Hedychium coronarium* and *Alpinia zerumbet;* the extract is one or a combination of two or more of a volatile oil, a water extract, an ethanol extract, an ethyl acetate extract and a methanol extract.

10. The method according to claim 9, wherein the pests are selected from one or more insects of the *Thysanoptera* order, the *Hemiptera* order, the *Lepidoptera* order, and animals of the *Tetranychidae* family, the *Tenuipalpidae* family, the *Eriophyidae* family, the *Tarsonemidae* family, the *Pyemotidae* family, the *Penthaleidae* family, the *Cheyetidαe* family, the *Sarcopteridae* family, the *Acaridae* family and the *Pyroglyphidae* family.

11. The method according to claim 9, wherein the pests are selected from one or more of *Frankliniella intonsa, Thrips tabaci Lindeman, Taeniothrips distalis Karny, Stenchaeotothrips biformis, Thrips hawaiiensis Morgan, Thrips palmi Karny, Frankliniella occidentalis, Thrips japonicus Bagnall, Thrips serratus Kobus, Frankliniella tenuicornis Uzel, Scirtothrips dorsalis Hood, Heliothrips haemorrhoidalis Bouche, Scirtothrips dorsalis Hood, Scolothrips sexmaculatus Pergande, Cnaphalocrocis medinalis, Spodoptera exigua, Spodoptera litura, Carposina sasakii, Helicoverpa armigera, Plutella xylostella, Diaphania indica, Maruca testulalis Geyer, Bemisia tabaci Gennadius, Trialeurodes vaporariorum, Aleurocanthus spiniferus, Dialeurodes citri Ashm, Bemisia myricae Kuwana, Aleurocybotus indicus David et Subramaniam, Aleurodicus dispersus, Oligonychus baipisongis, Oligonychus karamatus, Oligonychus rubicundus, Eotetranychus albus, Eotetranychus bailae, Eotetranychus camelliae, Tetranychus neocaledonicus, Tetranychus phaselus, Tetranychus urticae, Tetranychus cinnabarinus, Schizotetranychus baltazarae, Schizotetranychus bambusae, Schizotetranychus elongatus, Mixonychus aestiva, Mixonychus ganjuis, Panonychus citri,*

*Panonychus caglei, Allonychus bambusae, Allonychus wuyinicus, Stigmaeopsis celarius, Mononychellus georgicus, Acanthonychus jiangfengensis, Amphitetranychus viennensis, Psylla chinensis Yang et Li, Cicadellidae, Liriomyza, Chrysoperla sinica Tjeder, Solenopsis invicta,* termites, borers, mosquitoes, flies, *Blattaria,* flea.

**12.** The method according to claim 9, wherein the *Zingiberaceae* plant extract is selected from one of a *rhizoma zingiberis recens* extract and a *rhizoma kaempferia* extract.

Europäisches
Patentamt

European
Patent Office

Office européen
des brevets

# EUROPEAN SEARCH REPORT

**Application Number**

EP 25 16 0237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOOBOON THITAREE ET AL: "Toxicity of Phenylpropanoids from(Zingiberaceae) extracts againstHübner (Lepidoptera: Noctuidae)", PHYTOPARASITICA, SPRINGER, NL, vol. 48, no. 5, 10 July 2020 (2020-07-10), pages 833-840, XP037255672, ISSN: 0334-2123, DOI: 10.1007/S12600-020-00830-7 [retrieved on 2020-07-10] * abstract * * page 834, right-hand column, paragraph fourth - page 835, right-hand column, paragraph second * | 9-11 | INV. A01N25/02 A01N65/48 |
| X | CN 1 646 021 A (COUNCIL SCIENT IND RES [IN]) 27 July 2005 (2005-07-27) * table 1 * | 9,11,12 | |
| X | BUSSAMAN PRAPASSORN ET AL: "Effect of Crude Plant Extracts on Mushroom Mite, Luciaphorus sp. (Acari: Pygmephoridae)", PSYCHE: A JOURNAL OF ENTOMOLOGY, vol. 2012, 1 January 2012 (2012-01-01), pages 1-5, XP093300854, ISSN: 0033-2615, DOI: 10.1155/2012/150958 Retrieved from the Internet: URL:http://downloads.hindawi.com/journals/psyche/2012/150958.pdf> * abstract * * page 2, paragraph 2.1 - paragraph 2.4 * | 9 | TECHNICAL FIELDS SEARCHED (IPC) A01N |

-/--

The present search report has been drawn up for all claims

| Place of search | Date of completion of the search | Examiner |
|---|---|---|
| Munich | 31 July 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 16 0237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DASH PRITESH RANJAN ET AL: "STUDY OF ANTHELMINTIC AND INSECTICIDAL ACTIVITIES OF DIFFERENT EXTRACTS OF KAEMPFERIA GALANGA", INTERNATIONAL JOURNAL OF PHARMACEUTICAL SCIENCES AND RESEARCH, vol. 8, no. 2, 1 February 2017 (2017-02-01), pages 729-733, XP093300768, IN ISSN: 0975-8232, DOI: 10.13040/IJPSR.0975-8232.8(2).729-733 Retrieved from the Internet: URL:https://www.researchgate.net/profile/Pritesh-Dash-2/publication/313349586_STUDY_OF_ANTHELMINTIC_AND_INSECTICIDAL_ACTIVITIES_OF_DIFFERENT_EXTRACTS_OF_KAEMPFERIA_GALANGA/links/5896e211aca2721f0dabd65e/STUDY-OF-ANTHELMINTIC-AND-INSECTICIDAL-ACTIVITIES-OF-DIFFERENT-EXTRACTS-OF-KAEMPFERIA-GALANGA.pdf> * abstract * * page 732, paragraph Insecticidal Activity; table 2 * ----- -/-- | 9 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 31 July 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

page 2 of 4

## EUROPEAN SEARCH REPORT

Europäisches
Patentamt
European
Patent Office
Office européen
des brevets

**Application Number**

EP 25 16 0237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHN YOUNG-JOON ET AL: "Larvicidal activity of Kaempferia galanga rhizome phenylpropanoids towards three mosquito species", PEST MANAGEMENT SCIENCE, vol. 64, no. 8, 6 March 2008 (2008-03-06), pages 857-862, XP093300769, Hoboken, USA ISSN: 1526-498X, DOI: 10.1002/ps.1557 * abstract * * page 858, paragraph 2.4 * * page 859, paragraph 3.1 - paragraph 3.2 * * tables 1-3 * * page 862, left-hand column, last paragraph * | 1-12 | |
| X | NUGROHO BAMBANG W. ET AL: "Insecticidal constituents from rhizomes of Zingiber cassumunar and Kaempferia rotunda", PHYTOCHEMISTRY ELSEVIER, vol. 41, no. 1, 1 January 1996 (1996-01-01), pages 129-132, XP093300759, AMSTERDAM, NL ISSN: 0031-9422, DOI: 10.1016/0031-9422(95)00454-8 * abstract * * table 1 * | 9-11 | TECHNICAL FIELDS SEARCHED (IPC) |

-/--

The present search report has been drawn up for all claims

| Place of search | Date of completion of the search | Examiner |
|---|---|---|
| Munich | 31 July 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 4

Europäisches
Patentamt

European
Patent Office

Office européen
des brevets

## EUROPEAN SEARCH REPORT

**Application Number**

EP 25 16 0237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHANH PHAM NGOC ET AL: "A review on the ethnomedicinal uses, phytochemistry and pharmacology of plant species belonging to Kaempferia genus (Zingiberaceae)", PHARMACEUTICAL SCIENCES ASIA, vol. 48, no. 1, 1 January 2021 (2021-01-01), pages 1-24, XP093300771, ISSN: 2586-8195, DOI: 10.29090/psa.2021.01.19.070 * abstract * * page 18, paragraph 3.4.13 * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 31 July 2025 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0237

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2025

| Patent document cited in search report | | Publication date | Patent family member(s) | | Publication date |
|---|---|---|---|---|---|
| CN 1646021 | A | 27-07-2005 | AU | 2003201074 A1 | 08-10-2003 |
| | | | CN | 1646021 A | 27-07-2005 |
| | | | JP | 2005520842 A | 14-07-2005 |
| | | | US | 6623766 B1 | 23-09-2003 |
| | | | WO | 03079796 A1 | 02-10-2003 |
| | | | ZA | 200407596 B | 25-04-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Extraction Technology For Natural Plant Product. Chemical Industry Press, 2022, 100-110
- **ZHANG DONGMEI** ; **YUAN TING**. Study on the Extraction Technology of Volatile Oil from Ginger by Steam Distillation [J. *Agricultural Technology & Equipment*, 2023, vol. 02, 27-28
- **LIU JIANGWEI** ; **YE FEI**. Study on Extraction of Ginger Oil by Steam Distillation [J. *Modern Agriculture Research*, 2018, vol. 04
- **SUN JIAYI**. Research Progress on Extraction,Development and Utilization of Ginger Essential Oil [J. Shandong Chemical Industry, 2019, vol. 24
- **YANG SHIWEI**. Study on Supercritical CO2 Fluid Extraction and Microcapsulation of Ginger Essential Oil [D. Tianjin University of Science and Technology, 2015
- **CHENQI**. Microwave Assisted Hydro-distillation Extraction of Essential Oil from of Kaempferia Galanga L [J. *Chemical Engineering Management*, 2015, vol. 12, 2-3
- **LIU XUEMEI** ; **LIANG JIANQIN** ; **LU BIN et al.** Study on the Chemical Constituents of Volatile Oils from Kaempferia Galanga L.in Fresh and Dried Characters [J. *Lishizhen Medicine and Materia Medica Research*, 2008, vol. 08, 2007-2009
- **LIN ZHAOYU**. Study on Steam Distillation Law Draw of Characteristic Component-Kaempferia Galanga L. oil [J. *China Condiment*, 2005, vol. 08, 28-31
- **CHEN QINGSHENG** ; **HE JINGYU** ; **MENG XIAO et al.** Study on Anti-hair Loss and Anti-dandruff Effect of Active Extract from Three Kinds of Zingiberaceae [J. *Guangdong Chemical Industry*, 2021, vol. 48 (22), 70-72
- **WU CUNBING** ; **SHAO BOJIN** ; **WU JUNYAN et al.** Optimization of Ethanol Extraction of Flavonoids from Ginger and Evaluation of its Stability [J. *Journal of Southern Agriculture*, 2020, vol. 51 (11), 2798-2807
- **RAO JIARUI** ; **ZHANG XIN** ; **YU YONGXIU**. Extraction of Natural Products of Fresh Ginger and its Indoor Virulence Strength to Tea Grey Blight [J. *Agricultural Technology Service*, 2021, vol. 38 (08), 31-34
- **ZHOU YEYAN**. Microwave Extraction Process and Application Technology Research of Spices [D. Guangzhou University, 2011
- **WU XIAOFEI**. Research on Inhibiting Effect of Kaempferia Galanga extract on Dominant Spoilage Bacteria of Poultry Products [D. Qingdao University of Science and Technology, 2020
- **PING XUELI**. Extraction and Identification of Active Ingredients of Kaempferia Galanga and Use thereof in Composite Film [D. Chongqing Technology and Business University, 2022